# EUROPEAN PATENT APPLICATION

(11) **EP 4 102 064 A1**
(43) Date of publication of application: **14.12.2022**
(21) Application number: 22177846.7
(22) Date of filing: 08.06.2022
(51) Int. Cl.: F03D 13/25, B66C 23/20, F03D 13/40, F03D 80/50, E02B 17/00

(54) **OFFSHORE WIND TURBINE COMPRISING A SERVICE PLATFORM AND A CRANE ARRANGEMENT**

(30) Priority: 10.06.2021 DK PA202170298
(71) Applicant: Vattenfall AB, 169 79 Solna (SE)
(72) Inventor: CHRISTIANSEN, Anders Noer, 6000 Kolding (DK)
(74) Representative: Zacco Denmark A/S

(57) **Abstract**

The present disclosure relates to an offshore wind turbine (1). The offshore wind turbine (1) comprises a service platform (5) placed below the nacelle (2), and a service crane arrangement (6). The service platform (5) comprises a floor arrangement (9) comprising an upwardly facing floor surface (9a) that may be aligned with a door entrance (11) of the wind turbine. The service crane arrangement (6) comprises a support frame arrangement (7) and one or more crane booms (100, 200), wherein the support frame arrangement (7) is supported by the service platform (5) and comprises one or more upper support parts (12). The crane boom (100, 200) is suspended substantially horizontally from the one or more upper support parts (12) at a distance above the upwardly facing floor surface (9a), and the crane boom (100, 200) comprises a first, proximate boom part (100a, 200a) arranged proximate the tower, and a second, distal boom part (100b, 200b) extending out over an outer edge (10) of the service platform (5) floor (9). The service crane arrangement (6) further comprising a crane trolley (101, 201) configured to be displaced along a track (102, 202) in the longitudinal direction of the crane boom (100, 200) by means of a drive arrangement (103, 203), a flexible lifting medium (104, 204), a winch (110, 210) for winding and unwinding the flexible lifting medium (104, 204) and a drive unit (106, 206) for driving the winch, and the flexible lifting medium (104, 204) is connected to the crane trolley (101, 201) and a connection part (105, 205) suspended, so that the connection part is suspended from the crane trolley (101, 201). The winch is controllable so as to lift and lower the connection part between an upper position located above a floor plane (FP) defined by the upper floor surface (9a), and a lower position (POS3) placed below the floor plane (FP) in order to allow loading or unload service equipment (50) and/or personnel (40) connected to the connection part (105, 205) onto or from a marine vessel (30) when the crane trolley (101, 201) is placed at said second, distal boom part (100b, 200b).

## Description

The present disclosure relates to an offshore wind turbine comprising a platform, and a method of loading personnel and/or equipment between a service platform and a marine vessel.

### Background

Offshore wind turbines generally provides several advantages over e.g. land based wind turbines. Moreover the performance of wind turbines, including offshore wind turbines, has increased, and will most likely increase in the future, hence making offshore wind turbines relevant as a lucrative and economically feasible renewable power source also in in the future.

Offshore wind turbines are however more demanding to access when service at the wind turbine is needed or scheduled, as it must be accessed by a vessel such as a marine vessel, such as a boat. Generally, different ways of accessing an offshore wind turbine from a marine vessel are known. Patent document WO 2019/145226 A1 discloses a wirelessly controlled davit crane arranged at a platform if an offshore wind turbine. The wind turbine is approached by a water borne/marine vessel, and the davit crane is wirelessly controlled to in order to load equipment or personnel placed at a transport container onto the platform. WO 2019/086087 A1, EP 3 486 207 and US 2019/0234379 A1 discloses other crane solutions at wind turbines.

However, the above mentioned solutions suffers from drawbacks such as being rather cost expensive and/or mechanically complex. Additionally or alternatively, the above mentioned solutions may provide drawbacks in relation transportation options of the loads lifted by the crane and/or in relation to maintenance of the crane equipment. The present disclosure may help to solve or reduce one or more of the above mentioned drawbacks.

### Summary

The present disclosure relates to an offshore wind turbine comprising a nacelle mounted on a tower, wherein said tower supports on a foundation arrangement. The wind turbine comprises a service platform placed below the nacelle, and a service crane arrangement. The service platform comprises a floor arrangement comprising an upwardly facing floor surface, that in certain embodiments of the present disclosure may be aligned with a door entrance of the wind turbine.

The service crane arrangement comprises a support frame arrangement and a crane boom. The support frame arrangement may be supported by the service platform and comprises one or more upper support parts. The crane boom is suspended, such as substantially horizontally, from the one or more upper support parts at a distance above the upwardly facing floor surface. The crane boom comprises a first, proximate boom part arranged proximate the tower, and a second, distal boom part extending out over an outer edge of the service platform floor.

The service crane arrangement further comprises a crane trolley configured to be displaced along a track in the longitudinal direction of the crane boom by means of a drive arrangement, a flexible lifting medium, such as a wire, rope or chain, a winch for winding and unwinding the flexible lifting medium, and a drive unit for driving the winch. The flexible lifting medium is connected to the crane trolley and a connection part, so that the connection part is suspended from the crane trolley

The winch is controllable so as to lift and lower the connection part between an upper position located above a floor plane defined by the upper floor surface, and a lower position placed below the floor plane in order to allow loading or unload service equipment and/or personnel connected to the connection part onto or from a marine vessel when the crane trolley is placed at said second, distal boom part. The winch is controllable so as to lift and lower the connection part to load and/or unload said equipment and/or personnel onto or from the service platform floor when the crane trolley is placed at said first proximate boom part.

The present disclosure provides a cost efficient service platform solution where personnel and/or equipment may be transported to and from the service platform by means of the service crane arrangement. A human operator or the like may hence control the relevant parts of the service crane, such as trolley and/or winch by means of a control arrangement, in order to move the personnel and/or equipment between the service platform and the marine vessel.

The crane solution according to the present disclosure may moreover allow for a more maintenance free solution compared to some service crane solutions, such as service crane solutions comprising a davit crane solution comprising a yawing feature.

The crane arrangement according to the present disclosure may generally designed to perform mainly linear movements of the lifted equipment and/or personnel in the vertical direction (by lifting lowering by winding/unwinding the flexible lifting medium) and horizontal direction (by displacing a trolley along the crane boom). Rotational movement of the crane boom may thus be omitted. The need of oils or other fluids for e.g. lubrication and/or crane operation may also be reduced by means of the crane solution according to the present disclosure.

The crane arrangement according to the present disclosure, in case it is used for personnel, may moreover provide an improved working environment, as the requirements for the physical performance of the personnel, such as service technicians, are reduced. Such personnel may need to enter and leave service platforms of offshore wind turbines a significant amount of times during their working life. For example, ladder based platform entrance solutions where ladders are used for entering a service platform from a marine vessel may over time be hard for service personnel to use, and may in some situation even increase the risk of injuries or accidents when service personnel moves between a marine vessel and a wind turbine service platform.

For example, by means of a solution according to the present disclosure, personnel may control the trolley in order to place the trolley at the second, distal boom part, control the lifting arrangement in order to lower the flexible lifting medium arrangement towards the marine vessel, then a person may be attached to the flexible lifting medium by means of the connection part, and then, the attached person or another person may control the winch and the trolley in order to first lift the attached person to a location above a plane defined by the upwardly facing surface of a flooring of the floor, and then control the trolley in order to move the attached person to the first position above the flooring of the platform floor, possibly with a further step of lowering the person towards the service platform floor surface by unwinding the flexible lifting medium. Additionally or alternatively, the same may be provided when/if lifting equipment to the platform. A substantially reverse situation may occur when transporting personnel and/or equipment to the marine vessel.

The service platform arrangement preferably provides a structure raised above sea level and below the wind turbine nacelle/tower top, and the platform arrangement has a floor surface, such as a flat floor surface, where service personnel can go, stand and/or work. This may also be known as a working platform.

In one or more embodiments of the present disclosure, the one or more upper support parts comprises one or more transverse support beams extending over the upwardly facing floor surface, such as wherein the one or more transverse support beams extends between opposing vertical support arrangements such as comprising one or more support legs such as vertically arranged support legs.

This may allow for a simple, and yet structurally strong, platform solution comprising a service crane arrangement.

The transverse support beam(s) may in embodiments of the present disclosure act as lintel(s). The transverse support beams may in one or more embodiments of the present disclosure be directly or indirectly supported by the vertical support arrangements such as directly or indirectly supported by support legs, e.g. arranged at the sides of the platform.

The transverse support beams may directly or indirectly support the one or more crane booms.

In one or more embodiments of the present disclosure, the one or more crane booms are arranged below the transverse support beams, such as being suspended substantially horizontally from the transverse support beams at a location underneath the transverse support beams.

In embodiments of the present disclosure, the one or more crane booms is/are fixed to the transverse support beams by mechanical fastening such as one or more of welding bolts such as treaded bots and/or hook connections.

The service platform may in embodiments of the present disclosure comprise a tower side arranged proximate the tower or foundation arrangement, an outer distal side arranged opposite to the tower side and facing away from the wind turbine tower or foundation arrangement, and opposing side parts extending between the tower side and outer distal side. The transverse support beams may in embodiments of the present disclosure be arranged to extend between the opposing side parts of the platform.

It is understood that the crane solution according to the present disclosure, in some embodiments may be considered providing the primary entrance means for the platform. However, a secondary entrance solution such as a ladder solution may in certain embodiments of the present disclosure be provided for safety or the like, e.g. for use by personnel if for example failure of the service crane arrangement should occur. However, such a secondary entrance solution may also be omitted in some embodiments of the present disclosure.

The vertical support arrangements may be supporting on the service platform by being supported by, such as being structurally attached to, a platform floor frame structure, such as floor girders, extending beneath or at level with the platform floor, e.g. by means of bolts and/or welding.

The control arrangement may comprise wireless control so that personnel on the marine vessel can control the trolley/ies to the desired extent from the marine vessel and/or when lifted to the platform floor. For that purpose, the service crane winch(es) and/or trolley/ies may be controlled by means of a control arrangement comprising one or more wired and/or wireless remote controls.

In one or more embodiments of the present disclosure, the crane boom may be supported by the one or more upper support parts by means of a mechanical fixation connection such as one or more bolted and/or welded connections, at a predetermined fixation location so that the crane boom is configured to be maintained unmovable at the fixation location.

The crane boom(s) may hence so to say be permanently arranged at fixed locations/positions (though disassembling/removing the crane boom(s) with the purpose of crane maintenance may be allowed) above the service platform flooring, and where the second, distal boom part is configured to permanently extend out over the edge of the platform in order to be able to lift and lower the personnel and/or equipment between a marine vessel and the platform floor. This may provide a mechanically simple, cost efficient solution.

The crane boom may preferably extend beneath the upper support parts.

In one or more embodiments of the present disclosure, the crane boom(s) may be considered a part of the structure for assuring/increasing the structural integrity and/or strength of the overall platform construction and/or the crane boom supporting construction. In other embodiments, the crane boom(s) may only have limited or substantially no influence on the structural integrity and/or strength of the overall platform construction and/or the crane boom supporting construction, at least during normal use within the rated lifting capacity of the crane arrangement.

In one or more other embodiments of the present disclosure, one or more of the one or more crane booms may be configured to be displaced in a direction perpendicular to the longitudinal direction of the crane boom(s) towards and away from sides of the service platform by means of a crane boom displacement arrangement.

In one or more embodiments of the present disclosure, the opposing vertical support arrangements, the one or more upper support parts and the service platform floor together provides a platform entrance opening of the service platform through which the trolley and the lifted load may be transported to a position above the platform floor.

In one or more embodiments of the present disclosure, said one or more crane booms extends, such as horizontally, above the floor in a direction transverse, such as perpendicular, to the longitudinal direction of a plurality of said transverse support beams.

In one or more embodiments of the present disclosure, the outer edge may be arranged at a recessed portion of the service platform floor and/or floor structure to provide a space between side parts of the service platform in which the equipment and/or personnel may be transported in a vertical direction. In one or more further embodiments of the present disclosure, at least one of the transverse support beams may be arranged above the said space provided by the recessed portion in order to support the one or more crane booms near the location where the trolley may be arranged when lifting/lowering the equipment and/or personnel. This may allow for a more cost efficient, lighter, and possibly also more simple, load bearing structure for carrying the loads lifted by the crane.

In one or more embodiments of the present disclosure, the service crane arrangement comprises a first crane boom and a second crane boom. The first and second crane booms are spaced apart to provide a distance there between. A first crane trolley may in embodiments of the present disclosure be configured to be displaced along a track in the longitudinal direction of the first crane boom, and wherein a first flexible lifting medium may be connected to the first crane trolley and a connection part, so that the connection part is suspended from the first crane trolley. Additionally, in further embodiments of the present disclosure, a second crane trolley may be configured to be displaced along a track in the longitudinal direction of the second crane boom, and wherein a second, flexible lifting medium is connected to the second crane trolley and a connection part, so that the connection part is suspended from the second crane trolley.

The two flexible lifting mediums may in embodiments of the present disclosure be connected to each their winch for winding and unwinding the respective lifting medium, where the winches are independently operated.

The spaced apart crane booms may in embodiments of the present disclosure be spaced apart horizontally and/or be arranged parallel to each other.

For example the first crane boom may be a dedicated equipment crane boom for use during transport of equipment between the marine vessel and the service platform, and the second crane boom may be a dedicated personnel crane boom for use during transport of personnel between the marine vessel and the service platform.

This may increase safety for personnel. Wear on the equipment crane boom may be larger than on the personnel crane boom. For example the personnel crane boom may, during normal use, not lift more than about 60-200 kg, dependent on the personnel weight and other equipment brought by the personnel. If e.g. a personnel cage or harness is used for transporting the personnel, the weight may be higher, corresponding to the additional cage/harness weight.

The weight of the equipment lifted by the equipment crane boom may however be between e.g. 0-3000 kg, and often above 500 or 1000 kg, in some situations even more than 3000 kg. Hence, wear on the equipment crane may be larger over time. By dedicating different crane booms for personnel transportation and equipment, safety and/or reliability may be increased.

It may generally be understood that the first and second crane booms, first and second trolley and/or the like may vary in size, type and/or rated handling weight, or may be of substantially the same configuration with respect to one or more of e.g. size, type and/or rated handling weight.

It is understood that if more than one crane boom is present in the crane arrangement, these may both/all be suspended from the same one or more upper support parts at a distance above the upwardly facing floor surface, e.g. by being supported by the same transverse support beams.

In one or more embodiments of the present disclosure, a first winch may be configured to wind and unwind the first flexible lifting medium, and a second winch may be configured to wind and unwind the second lifting medium, for example, in one or more embodiments, the first and second winch may be configured to be operated independently of each other by means of a control system.

This allows personnel to handle transportation of e.g. personnel and equipment individually by means of the respective first and second crane booms.

In one or more embodiments of the present disclosure, the service platform may be structurally fixed, such as mainly structurally fixed, to the foundation arrangement below the wind turbine tower by means of one or a plurality of platform connection arrangements.

This may e.g. provide a more cost efficient wind turbine as the tower structure, such as a tubular metal tower structure, may not need to carry the platform weight, at least on it's own. Loads from a service platform acting on the tower and having a force component transverse to the longitudinal direction of the tower may additionally be reduced or omitted if the platform is mainly supported by the foundation arrangement.

The platform connection arrangement(s) may in one or more embodiments of the present disclosure is configured to carry at least 70%, such as at least 80%, e.g. at least 95% of the overall weight of the service platform and loads such as the equipment and/or personnel when handled by the service crane arrangement and/or supporting on the platform floor.

This may e.g. provide a cost efficient solution where undesired loads on the wind turbine tower are avoided or reduced. Additionally or alternatively, it may provide a solution that may be more easy to adapt and/or implement.

Additionally or alternatively, in embodiments of the present disclosure, the platform connection arrangement may comprise one or more upper platform connection arrangements that is/are located/arranged above the horizontal floor plane and connected to the wind turbine structure above the floor plane.

In certain embodiments of the present disclosure, the upper platform connection arrangement(s) may act as a primary support that takes/carries at least 50%, such as at least 60% or 70% of the weight of the platform (and the material/equipment loaded thereon/hanging therefrom).

In one or more embodiments of the present disclosure, the platform connection arrangement comprises a carrying structure, such as one or more connection legs, extending between the service platform and the foundation arrangement, and is configured to carry the service platform.

In one or more embodiments of the present disclosure, the platform connection arrangement(s) may be configured to transfer at least 70%, such as at least 80%, e.g. at least 95% of the overall weight of the service platform, service crane arrangement and loads such as the equipment and/or personnel handled by the service crane arrangement and/or supporting on the platform floor to the foundation arrangement. Hence, the foundation arrangement may be configured to carry, such as directly carry, at least 70%, such as at least 80%, e.g. at least 95% of the overall weight of the service platform, service crane arrangement and loads handled by the service crane arrangement and/or supporting on the platform floor.

The platform, service crane arrangement, loads (equipment and personnel) carried by the crane, support frame arrangement and the like may be carried by the same platform connection arrangement(s).

In one or more embodiments of the present disclosure the platform connection arrangement may comprise an angle bracket arrangement and/or a shelf support bracket arrangement.

In one or more embodiments of the present disclosure, the platform connection arrangements located below a horizontal floor plane defined by the upper floor surface.

In one or more embodiments of the present disclosure the platform connection arrangement may comprise one or more connector parts comprising an upwardly or downwardly facing opening into which an end of a connection part, such as a male part, of the platform connection arrangement extend. This may in further embodiments of the present disclosure be a result of an installation process where the platform is lowered onto a connection solution comprising one or more parts fixed to the wind turbine structure. This may enable a cost efficient and mechanically simple solution that may also enable more easy platform installation or platform removal.

In one or more embodiments of the present disclosure the platform connection arrangement(s) may comprises one or more brackets to which a carrying structure of the connection arrangement(s) is attached so that the service platform is carried by the one or more brackets, such as wherein the one or more brackets comprises an upwardly or downwardly facing opening into which a downwardly facing connection part of the carrying structure extends.

The part of the platform connection arrangement comprising the connection part, such as a male part, for extending into the upwardly or downwardly facing opening may e.g. in some embodiments be or comprise a hook /hook shape.

This may allow for easy installation and/or dismantling of the service platform at the offshore wind turbine.

Said one or more brackets may in embodiments comprise one or more cup/bucket, pipe or sleeve or ring like bracket solutions comprising the upwardly or downwardly facing opening. It is generally understood that the bracket(s) may comprise a rail or pipe like solution into which a connection part, such as a male part, may be slideably engaged. When the platform is arranged at the desired location, further fixation means such as bolts (threaded or non-threaded bolts), welding, clips/hook solutions or the like may in further embodiments of the present disclosure be provided to maintain the service platform in place.

In one or more embodiments of the present disclosure, the service platform may be configured, such as designed, to carry a rated, such as certified, total external weight, such as provided by personnel and/or equipment. This rated, such as certified, total external weight, may in some embodiments be of no more than 8 ton, such as no more than 5 ton, such as no more than 3 ton, for example no more than 2 ton. In further embodiments, the rated, such as certified, total external weight, may in some embodiments be of no more than 20 ton such as no more than 10 ton.

This may allow for an advantageous and cost efficient service platform solution. 9. In some embodiments of the present disclosure, the service platform may be configured/designed to carry a total external weight, such as provided by personnel and/or equipment, of at least 1 ton, such as at least 2 ton.

In one or more embodiments of the present disclosure, the service platform may have, such as define, a maximum width extending horizontally and in a direction transverse to the longitudinal direction of the tower. This width of the service platform may in embodiments of the present disclosure be smaller than the width, such as smaller than the diameter, of the tower at least at the location opposite to the service platform.

This width of the service platform may additionally or alternatively, in embodiments of the present disclosure be smaller than the width, such as smaller than the diameter, of the foundation arrangement such as a transition piece part, at least at the location opposite to the service platform.

In one or more embodiments of the present disclosure, the maximum width of the service platform may be at least 5%, such as at least 10%, for example at least 20% or 30% smaller than the width of the tower.

In one or more embodiments of the present disclosure, the service platform may have a maximum width of no more than 10 meters, such as no more than 8 meters, such as no more than 6 meters or no more than 4 meters.

This allows for providing a cost efficient solution compared to platform solutions that are as wide or even wider than the tower diameter. No walkway may in some embodiments of the present disclosure be provided around the tower/foundation arrangement, at least at the level of the service platform.

The service platform according to embodiments of the present disclosure may be considered as an external add-on to the wind turbine rather than being integrated in the wind turbine tower/foundation arrangement structure. The service platform may e.g. be mounted during installation of the wind turbine or after the wind turbine has been installed.

In one or more embodiments of the present disclosure, the service platform may have a maximum length, extending in a direction, horizontally, away from and perpendicular to the tower and/or foundation arrangement. This platform length may in embodiments of the present disclosure be of no more than 10 meters, such as no more than 8 meters, such as no more than 6 meters or no more than 4 meters. The platform width may extend in a direction perpendicular to the platform length.

In some embodiments of the present disclosure, the maximum length and maximum width of the service platform may vary less than 2 meters such as less than 1 meter, e.g. less than 0.5 metres. This may e.g. help to allow for using identical service platform components for more parts of the service platform.

In one or more embodiments of the present disclosure, the platform arrangement may comprises a first proximate side (may also be called the tower side) proximate the wind turbine structure and a second distal side arranged distal to the wind turbine structure, and opposing platform sides extending from said distal side to said proximate side.

An access opening for accessing the platform and/or the outer edge of the service platform may in embodiments of the present disclosure be placed at the distal side.

The maximum width of the service platform may in embodiments of the present disclosure be determined/defined between the opposing platform sides extending from said distal side to said proximate side.

In one or more embodiments of the present disclosure, said winch, such as winches, may be attached to the crane trolley to be displaced together with the crane trolley.

This may provide a cost efficient solution and/or a more mechanically simple solution that may be more easy to maintain and/or implement.

It is understood that of the crane arrangement comprises more than one crane boom each comprising a trolley to be displaced along the respective crane boom, one or both of the crane trolleys may comprise a winch.

In one or more embodiments of the present disclosure, the crane boom(s) may comprise one or more of an H-beam, an I-beam, a T-beam or a box beam.

This may provide a cost efficient and yet structurally strong crane boom solution. In some embodiments of the present disclosure, the H or I beam may provide the said track(s) as an integrated part of the H or I beam, e.g. at opposing sides of the H or I beam. Hence, the crane boom may provide one or more, such as two tracks for supporting the trolley, and wheels of the trolley may hence roll along the track(s). In case of a box beam, the track may be placed at an upwardly facing surface of the beam.

In one or more embodiments of the present disclosure, the distal part of the one or more crane booms may extend with a length of at least 1 meter, such as at least 2 meter, e.g. at least 3 meters out over the outer edge if the platform floor.

The foundation arrangement may, in one or more embodiments of the present disclosure, be bottom fixed. Additionally or alternatively, in one or more embodiments of the present disclosure, the foundation arrangement may comprise one of
- a tripod foundation,
- a monopile foundation,
- a gravity foundation,
- a jacket foundation or
- a floating/buoyant foundation.

In some embodiments of the present disclosure, chains or other types of connection mediums may provide a bottom fixing of the floating/buoyant foundation

In one or more embodiments of the present disclosure, the foundation arrangement may comprise a transition piece, this transition piece may in embodiments of the present disclosure be arranged between a wind turbine foundation of the foundation arrangement and the wind turbine tower. For example, in embodiment of the present disclosure, the service platform may be structurally fixed, such as mainly structurally fixed, to the transition piece by means of a platform connection arrangement(s).

The transition piece and the foundation may be different parts that may be mechanically connected to each other, e.g. by means of a flange connection

The tower and transition piece may be different parts that may be mechanically connected to each other, e.g. by means of a flange connection.

In some embodiment s of the present disclosure, at least a part of the foundation arrangement, such as the transition piece, and the tower, may be integrated units.

In one or more embodiments of the present disclosure, the service platform may be structurally fixed, such as mainly structurally fixed, to the wind turbine tower by means of a platform connection arrangement(s). This is in that case provided above the wind turbine foundation arrangement and/or above a transition piece, if present.

In one or more embodiments of the present disclosure, the crane trolley may be configured to be placed underneath and/or inside a weather shield, such as underneath a minor roof structure and/or inside a minor housing, at least when not in use.

This weather shield may improve weather protection and e.g. shield the trolley, the lifting arrangement, and/or the drive(s) for displacing the trolley and/or operating the lifting arrangement when not in use. This may be advantageous due to the relatively harsh environment at sea that may reduce the lifetime of the trolley and/or the equipment associated therewith, such as for example one or more of motors, wheels, gears, hoist equipment and/or the like. The weather shield may in certain embodiments be provided by the wind turbine in case the trolley may be able to move into the wind turbine interior such into the interior of the tower or a part of the foundation arrangement such as the transition piece.

The maximum area, described in a horizontal plane, of the weather shield such as a minor roof structure and/or minor housing may be less than 4m2, such as less than 3 m2 Such as less than 1.5 m2, e.g. less than 1 m2. This may help to provide a solution that may be less wind sensitive and/or may help to reduce wind loads on the wind turbine and/or service platform, at least in case the weather shield is placed outside the wind turbine. This may in embodiments be advantageous when compared to covering substantially the entire crane structure and/or platform floor, or large pats thereof by means of a service platform roofing comprising roofing plates.

The weather shield may describe a maximum area in a horizontal plane that is not more than half, such as no more than 1/3, e.g. no more than 1/5 such as no more than 1/8 of the maximum area described by the service platform floor in a horizontal plan.

The minor roof structure may be placed at a permanent location, e.g. close/proximate to the wind turbine tower, or may alternatively be arranged to move together with the trolley.

In one or more embodiments of the present disclosure, said drive arrangement and said drive unit may be configured to be controlled by means of a wireless control system, comprising one or more controllers, such as one or more controllers configured to receive control signals from one or more remote controls such as wireless remote controls.

In one or more embodiments of the present disclosure, said crane boom, such as at least one of the crane booms in case more than one is present, may be is aligned with, or is configured to be displaced to be aligned with, the door entrance.

This may be advantageous in case the lifted load should move through the door opening.

In one or more embodiments of the present disclosure, a first winch may be configured to wind and unwind the first flexible lifting medium, and wherein the first winch is configured to be controlled by means of a first drive unit. additionally, a second winch may be configured to wind and unwind the second lifting medium, and wherein the second winch is configured to be controlled by means of a second drive unit. The first and second winches may her, in further embodiments of the present disclosure, be configured to be operated simultaneously, such as synchronized/in a synchronized manner, by means of a control system configured to control the first and second drive units.

Additionally or alternatively, In one or more embodiments of the present disclosure, the first crane trolley may be configured to be displaced along a track by means of a first drive arrangement, wherein the second crane trolley is configured to be displaced along a track by means of a second drive arrangement, and wherein the first and second crane trolley are configured to be operated simultaneously, such as synchronized/in a synchronized manner, by means of a control system configured to control the first and second drive arrangements.

The above mentioned embodiments of synchronized operation may e.g. be advantageous in case the flexible lifting mediums are both connected to a common load, such as personnel or equipment, to be lifted. Both the flexible lifting mediums may hence share the weight of the common load during the lifting, or one of the flexible lifting mediums may act as a backup in case unintended events happens. Hence the control system assures that when a user operates a remote control to lift and move the lifted load vertically and/or horizontally, this is provided in a synchronized manner. The winches and cranes may additionally or alternatively in other embodiments of the present disclosure be controlled individually and unsynchronized.

In one or more embodiments of the present disclosure, said crane boom or crane booms may extends into the interior of the wind turbine through an opening in a wall of the wind turbine. In further embodiments of the present disclosure, the trolley may be configured to move into and out of the interior of the wind turbine through said opening.

Said opening in the wall may comprise an opening in an exterior wall of the wind turbine, such as a tower wall, transition piece wall, or another wall of the foundation arrangement. This opening may e.g. be separate from or integrated in/together with the door opening.

The present disclosure moreover relates, in a second aspect, to a method of transporting personnel and/or equipment between a marine vessel and a service platform of an offshore wind turbine. The offshore wind turbine may be an offshore wind turbine according to one or more of the above mentioned embodiments. The method comprises the steps of:
- approaching the offshore wind turbine by means of a marine vessel
- operating the crane trolley by means of the drive arrangement to place the crane trolley at the second, distal boom part,
- lowering the flexible lifting medium and connection part towards the marine vessel by means of the winch to a position below a floor plane defined by the platform when the crane trolley is placed at the second, distal boom part,
- lifting the personnel and/or the equipment at the marine vessel by means of the lowered connection part and flexible lifting medium from the marine vessel and to a position above the floor plane. This is may be provided by operating the winch.
- operating the crane trolley by means of the drive arrangement so as to move the crane trolley and thereby the lifted personnel and/or equipment along the crane boom to a position above the floor. In one or more further embodiments of the method, the winch may be operated to lower the lifted personnel and/or equipment towards the platform floor.

It is generally understood that the control of the winch and the trolley may be provided by means of a control system, e.g. by a human operator operating a remote control.

In one or more embodiments of the method, the service crane arrangement may comprise a first crane boom and a second crane boom, wherein the first and second crane booms are spaced apart to provide a distance there between, wherein a first crane trolley is displaced along a track in the longitudinal direction of the first crane boom by means of a drive arrangement, and wherein a first flexible lifting medium is connected to the first crane trolley and a connection part, so that the connection part is suspended from the first crane trolley,
wherein a second crane trolley is displaced along a track in the longitudinal direction of the second crane boom by means of a drive arrangement, and wherein a second, flexible lifting medium is connected to the second crane trolley and a connection part, so that the connection part is suspended from the second crane trolley,
wherein the first flexible lifting is connected to a first winch, and wherein the first winch is operated to wind and unwind the a first flexible lifting medium,
wherein the second flexible lifting medium is connected to a second winch, and wherein the second winch is operated to wind and unwind the second flexible lifting medium.

In one or more embodiments of the method, the first crane boom, the first crane trolley, the first flexible lifting medium and the first winch may be utilized for transporting equipment between the service platform and the marine vessel, and the second crane boom, second, the second crane trolley, the second flexible lifting medium and the second winch may be utilized for transporting personnel between the service platform and the marine vessel.

Having a first crane boom that is dedicated as a personnel crane boom, and a second crane boom that is dedicated for transporting equipment may be advantageous for e.g. safety reasons.

In one or more embodiments of the method, the first crane boom, the first crane trolley the first flexible lifting medium and the first winch may constitute an equipment crane assigned and dedicated for transporting equipment between the service platform and the marine vessel, and the second crane boom, the second crane trolley, the second flexible lifting medium and the second winch may constitute a personnel crane assigned and dedicated for transporting personnel between the service platform and the marine vessel.

In one or more embodiments of the method, the method may comprise the step of lowering both the first and second flexible lifting mediums, and first and second connection parts to a level below the floor plane, and
connecting personnel lifting equipment to both the first and second flexible lifting mediums by means of the first and second connection parts,
lifting the personnel by means of the personnel lifting equipment while both the first and second flexible lifting mediums are connected thereto, wherein said lifting is provided by means of one or both of said first and second flexible lifting mediums by winding one or both of said winches. The said winches may here be controlled simultaneously by means of a common control system.

This may e.g. be advantageous from a safety embodiment and/or cost efficiency embodiment.

In one or more embodiments of the method, the control system may operate one of the winches to provide a primary lifting of the personnel by means of a first of the flexible lifting mediums, and wherein the control system operates the other of the winches so that the weight lifted by the other flexible lifting mediums is reduced compared to the weight lifted by the first flexible lifting medium.

The present disclosure moreover relates, in a third aspect, to a method of transporting personnel and/or equipment between a marine vessel and a service platform of an offshore wind turbine such as an offshore wind turbine according to one or more embodiments and/or items or claims of the present disclosure. The method according to the third aspect comprises the steps of:
connecting the connection part of a crane arrangement according to any of the previously disclosed aspects to a load, such as a load comprising personnel and/or equipment,
lifting the connected load by winding a winch so that the load is suspended at a position above a floor plane defined by the platform floor,
providing a linear displacement of the lifted load by displacing a trolley from which the load is suspended towards a another part of a crane boom, such as a distal part that is distal to the offshore wind turbine, or proximate the offshore wind turbine, Unwinding the winch so as to lower the lifted lofted load, such as towards a vessel or a platform floor, and
disconnecting the load from the connection part.

Additionally, the present disclosure relates to use of a service crane arrangement of an offshore wind turbine according to any one or more of the preceding embodiments for transporting personnel between a platform and a marine vessel. In further embodiments of said use, a first crane boom may be used for transporting equipment, and wherein a second crane boom is used for transporting said personnel.

### Brief description of the drawings

Embodiments of the present disclosure will be described in the following with reference to the accompanying drawings in which exemplary embodiments are shown, wherein:
- Figure 1: : illustrates an offshore wind turbine according embodiments of the present disclosure, comprising a service platform
- Figure 2: : illustrates embodiments of a service platform comprising a crane arrangement according to the present disclosure,
- Figure 3: : illustrates a service platform on an offshore wind turbine according to further embodiments of the present disclosure,
- Figure 4: : illustrates a service platform on an offshore wind turbine according to further embodiments where upper transverse support beams are provided,
- Figure 5: : illustrates a service platform according to embodiments of the present disclosure, where a service platform has a width that is lower than the tower width,
- Figures 6a-6b: : illustrate a control system according to embodiments of the present disclosure,
- Figure 7: : illustrates a crane arrangement and a platform according to embodiments of the present disclosure, where a load is lifted by the crane arrangement,
- Figure 8: : illustrates a floor structure according to the present disclosure,
- Figure 9: : illustrates a platform floor having an outer recessed floor edge placed beneath a crane beam, according to embodiments of the present disclosure,
- Figure 10: : illustrates an embodiment of the present disclosure where a trolley is arranged inside a wind turbine, and
- Figure 11: : illustrates an embodiment of the present disclosure wherein a winch is arranged external to a trolley,
- Figs. 12 and 13: : illustrates various embodiments of a connection arrangement and a method of installing a platform on a wind turbine structure according to embodiments of the present disclosure,
- Figs 12a and: 12b : illustrates embodiments of the present disclosure wherein a connector part comprising an upwardly facing opening is placed at a wind turbine, and
- Fig. 13a: : illustrates an embodiment of the present disclosure wherein a connector part comprising a downwardly facing opening is placed at a platform.

### Detailed description

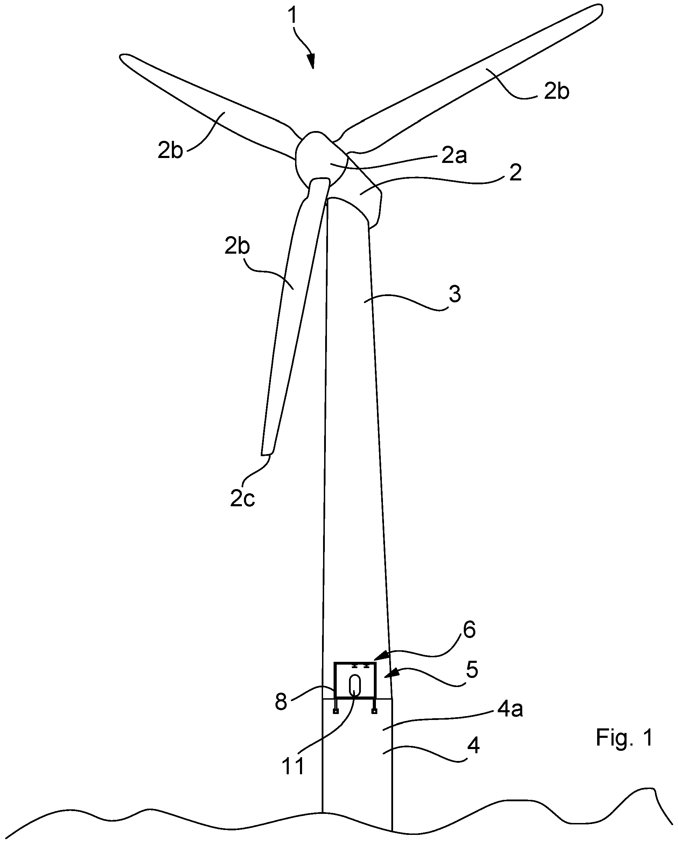

Fig. 1 illustrates, schematically and in perspective, an offshore wind turbine 1 according to embodiments of the present disclosure. The wind turbine comprises a nacelle 2 mounted on a tower 3. The tower 3 supports on a foundation arrangement 4. The wind turbine comprises wind turbine blades 2b attached at a hub 2a, and the hub is rotatably connected to a generator for generating electrical power. A gear may be present, or it may be a wind turbine of the gearless kind. The electrical energy generated by the generator from the wind energy may be transmitted from the wind turbine, e.g. to a utility grid, and/or be used locally at the wind turbine by one or more electric loads (not illustrated) such as one or more of rechargeable batteries, gas, such as hydrogen, production units and/or the like. Although not illustrated, it is understood that the wind turbine 1 may comprise various controllers, switchgear, drive train components, blade pitch mechanisms, yaw drives for rotating the nacelle, and/or the like.

The foundation arrangement 4 may in embodiments of the present disclosure comprise one of a tripod foundation, a monopile foundation, a gravity foundation, a jacket foundation or floating/buoyant foundation.

The foundation arrangement 4 may in embodiments of the present disclosure be a bottom fixed foundation arrangement that may either support on the sea floor or, in case it is a floating foundation arrangement, it may be connected to a connection part (not illustrated) at the sea floor by means of one or more foundation connection mediums such as wires or chains (not illustrated) extending between the floating foundation arrangement and the connection part at the sea floor.

In some embodiments of the present disclosure, at least a part of the foundation arrangement 4, such as the transition piece 4a, and the tower 3, may be/considered an integrated unit. Hence, in this embodiment, the transition piece part may be integrated in the lower tower structure 3 and may e.g. be configured to be permanently connected to the tower or may be considered a permanent part of the tower. Hence, during installation, a transition piece part 4a may not need to be connected to a foundation part before the tower is provided, as at least a part of the tower, such as the entire, tower may be connected to the foundation part as the transition piece may be integrated therein. In other embodiments of the present disclosure, the foundation arrangement may comprise a transition piece 4a arranged between a wind turbine foundation of the foundation arrangement 4 and the tower 3. Mechanical connections such as a plurality of bolts or the like, may connect and fixate the tower 3 to the transition piece 4a, and/or mechanical connections such as a plurality of bolts or the like, may connect and fixate the transition piece 4a to a remaining, lower part of the foundation arrangement such as one of the above mentioned foundation solutions.

The exterior tower 3 wall and/or the transition piece 4 wall may comprise a steel wall, a concrete wall such as reinforced concrete wall comprising steel and/or fibre reinforcements embedded in the concrete wall and/or the like. The wall of the tower and/or wall of the transition piece encloses a hollow interior room/space (not illustrated).

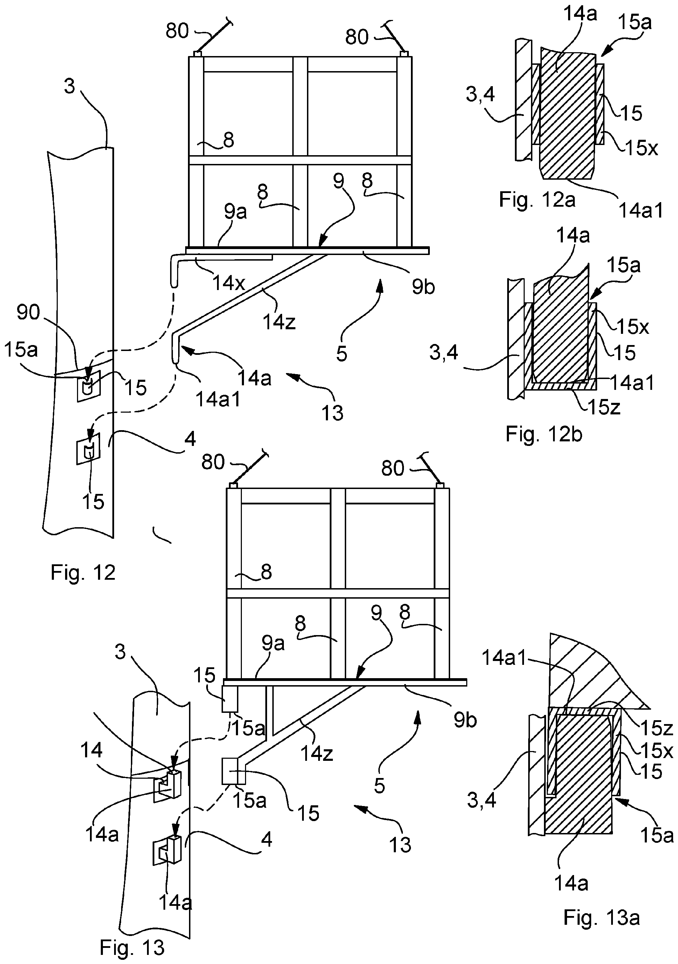

The service platform 5 may be structurally fixed, such as mainly structurally fixed, to the foundation arrangement 4 or tower 3 such as a transition piece or similar by means of one or more platform connection arrangements 13 (see also one or more of figs 12-13a).

As can be seen, the wind turbine comprises a service platform 5 placed beneath the wind turbine nacelle 2. The upwardly facing surface of the floor of the service platform 5 (also referred to as platform in the following), may be arranged at least three meters, such as at least four or five meters below a blade tip 2c when blade tip is placed in the lowermost position and hence when the blade extends substantially vertically and downwards, and with a distance to the sea surface/sea level.

The platform 5 may in embodiments of the present disclosure be a permanent platform that after installation may be maintained installed at the wind turbine over a substantial part of the wind turbine life time, and act as a service platform when service at the wind turbine is needed.

The position of the platform floor above sea level may be adapted to the local geographical conditions where the wind turbine is placed. In some embodiments of the present disclosure, this position may be predetermined dependent on the design and/or location of the foundation arrangement 4 and/or a certain part the tower 3. Local weather analyses and other may provide basis for determining how high the service platform 5 should be placed above sea level. Generally, the distance from the downwardly facing surface of the service platform floor to the sea level may be at least 5 meters, such as at least 10 meters, for example at least 20 meters such as at least 30 meters.

As can be seen from fig. 1, a door entrance 11 to the interior of the wind turbine 1 may be aligned to be accessible from the service platform 5. The service platform 5 floor arrangement may comprise an upwardly facing floor surface aligned with the lower part of the door entrance.

The wind turbine may moreover comprise a crane arrangement 6. Embodiments of the crane arrangement 6 are described in more details below.

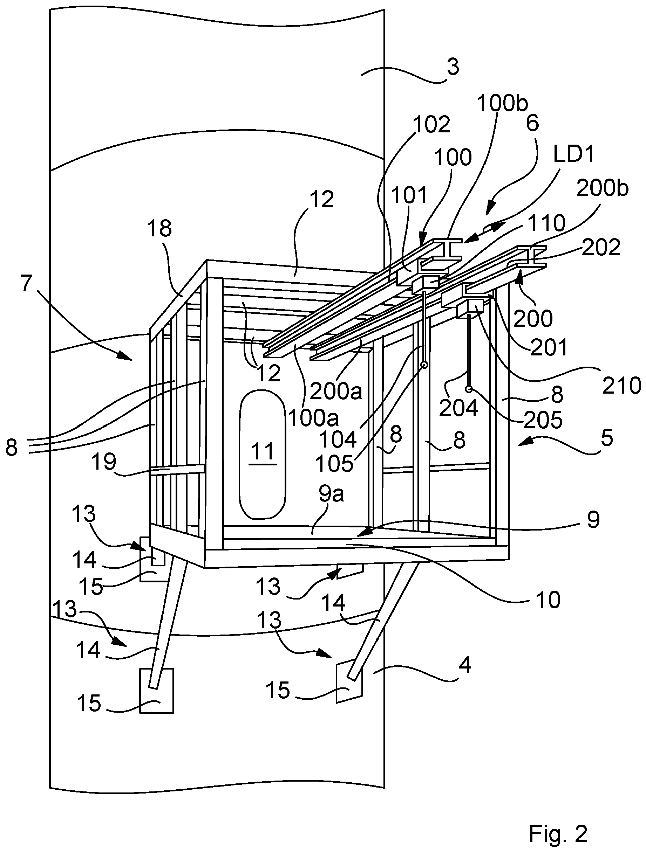

Fig. 2 illustrates, schematically and in perspective, the service platform 5 according to embodiments of the present disclosure.

The service platform 5 comprises a floor arrangement 9 comprising an upwardly facing floor surface 9a that may e.g. be aligned with a door entrance 11 of the wind turbine tower (or foundation arrangement such as a door opening in a transition piece part), at least so that a person and/or equipment can access the interior of the wind turbine through the opening 11, from the platform. The surface 9a may be arranged below a horizontal level of the lowermost part of the door entrance 11.

A service crane arrangement 6 comprises a support frame arrangement 7 and at least one crane boom 100, 200. In the present example, the crane arrangement comprises two crane booms that are arranged next to each other. It is generally understood that even though the figures may generally disclose two crane booms 100, 200 with each their trolley and the like, it is understood that in embodiments of the present disclosure, only one crane boom may be present. In further embodiments, three or more crane booms may be provided.

It is understood that the service platform 5 may comprise the service crane arrangement 6.

According to the present disclosure, the service crane arrangement 6 may as described above comprise the first crane boom 100 and the second crane boom 200, and these crane booms 100, 200 are spaced apart to provide a distance there between. Hence, a first crane trolley 101 is configured to be displaced along a track 102 in the longitudinal direction LD1 of the first crane boom 100, and a first flexible lifting medium 104 is connected to the first crane trolley 101 and a connection part 105, so that the connection part 105 is suspended from the first crane trolley. Moreover, a second crane trolley 201 may be provided and configured to be displaced along a track 202 in the longitudinal direction LD1 of the second crane boom 100. Here, a second, flexible lifting medium 204 is connected to the second crane trolley 201 and a connection part 205, so that the connection part 205 is suspended from the second crane trolley.

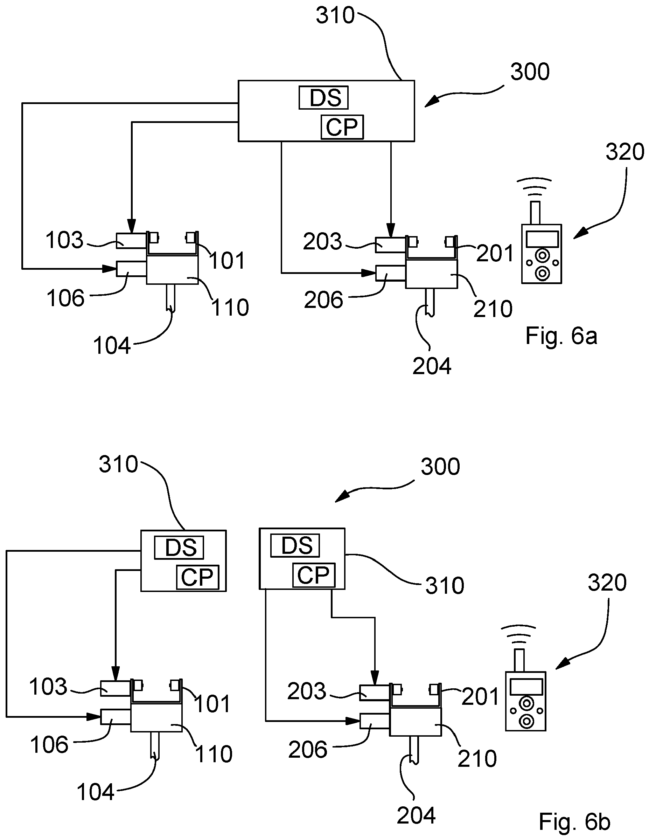

The two flexible lifting mediums may in embodiments of the present disclosure be connected to each their winch for winding and unwinding the respective lifting medium, where the winches may be configured to be independently operated. However, a single control unit may be configured to control both winches individually. In some embodiments, the controller may also be controlled to enable simultaneous control of the two winches, e.g. in order to enable lifting a load by means of both flexible lifting mediums at the same time, e.g. to distribute forces and/or enable improved balancing of the lifted load. This is described in more details later on, such as in relation to figs 6a-6b.

The spaced apart crane booms 100, 200 may in embodiments of the present disclosure be spaced apart horizontally as illustrated and/or be arranged parallel to each other.

The support frame arrangement 7 is supported by the service platform 5 and comprises one or more upper support parts 12. The upper support parts 12 may comprise one or more transverse support beams, such as horizontally extending support beams, extending over the upwardly facing floor surface 9a. This may be provided as illustrated so that the one or more transverse support beams 12 extends between opposing vertical support arrangements of the support frame arrangement 7, where the vertical support arrangements comprises one or more support legs 8, such as vertically arranged support legs. These vertical support arrangements 8 may be arranged at the sides of the platform, and the transverse support beams 12 may hence extend over the platform floor surface 9a between the sides of the platform.

In some embodiments of the present disclosure, the transverse support beams 12 may be directly supported by the vertical support legs 8, in other embodiments, a horizontal interconnecting part 18, such as a beam, extending between vertical support arrangements such as the support legs 8 at the same side of the platform 5 may provide a support of the transverse support beams 12. In some embodiments, some transverse support beams 12 may be supported directly by vertical support legs 8 whereas other transverse support beams 12 may be supported by the interconnecting part 18 if present.

In some embodiments, the horizontal interconnecting part(s) 18 may comprise, be or act as a girder.

It is generally understood that the crane boom 100, 200 and/or one or more parts 8, 12, 18 of the support frame arrangement 7 may be made from one or more of steel, such as stainless steel, carbon fibre, glass fibre or concrete or other suitable materials. The materials may be different form the different parts, for example, the crane boom 100, 200 may comprise concrete such as strengthened concrete with metal or fibre reinforcements whereas the support frame arrangement 7 may mainly be provided in a steel material, or vice versa. In some embodiments, both the crane boom 100, 200 and the structural parts 8, 12, 18 of the support frame arrangement may be made from the same material such as concrete components, steel components and/or carbon fibre components. In the recent years, reinforcing solutions for structural components such as e.g. concrete components, such as reinforcements provided by means of carbon fibre fabric material and/or carbon fibre rods have improved. These may in some embodiments be used in the present crane solutions for one or more of the crane related components 100, 200, 12, 18, 8.

It is understood that the components of the platform and the crane arrangement, including the support frame arrangement, may comprise suitable treatment with the purpose of weather resistance, such as one or more coatings, such as paintings or the like, that may be suitable for use in a marine environment.

The crane booms 100, 200 are suspended substantially horizontally from the one or more upper support parts 12 at a distance above the upwardly facing floor surface 9a. The vertical distance from the floor surface 9a to a bottom surface of the crane booms 100, 200 may in embodiments of the present disclosure be at least 2 meters, such as at least 2.5 meter or at least 3 meters. In embodiments of the present disclosure, the vertical distance from the floor surface 9a to a bottom surface of the crane booms 100, 200 may be between 2 meters and 6 meters, such as between 2.5 meters and 5 meters.

Each of the crane booms 100, 200 comprises a first, proximate boom part 100a, 200a arranged proximate the tower, and a second, distal boom part 100b, 200b extending out over an outer edge 10 of the service platform 5 floor 9. The proximate boom part 100a, 200a of one or both of the crane booms 100, 200 comprises a boom part that is placed above the platform floor 9. The distal boom parts 100b, 200b extends out over the edge 10 of the floor, so that the distal boom part 100b, 200b hangs over the sea water, e.g. so that a marine vessel can move in under the distal boom part.

A crane trolley 101, 201 is placed at each of the crane booms. This trolley is configured to be displaced along a track 102, 202 in the longitudinal direction LDlof the respective crane boom 100, 200 by means of a drive arrangement.

A flexible lifting medium 104, 204 such as a wire, rope or chain, is connected to a winch 110, 210 for winding and unwinding the flexible lifting medium 104, 204. A drive unit (not illustrated in fig. 1) is configured to drive the winch.

The flexible lifting medium 104, 204 is connected to the crane trolley 101, 201 and a connection part 105, 205, so that the connection part is suspended from the crane trolley 101, 201. The connection part may comprise a hook arrangement, an interlocking mechanism, or the like, and is configured so that a load to be lifted can be connected to the flexible lifting medium through/by means of the connection part 105, 205.

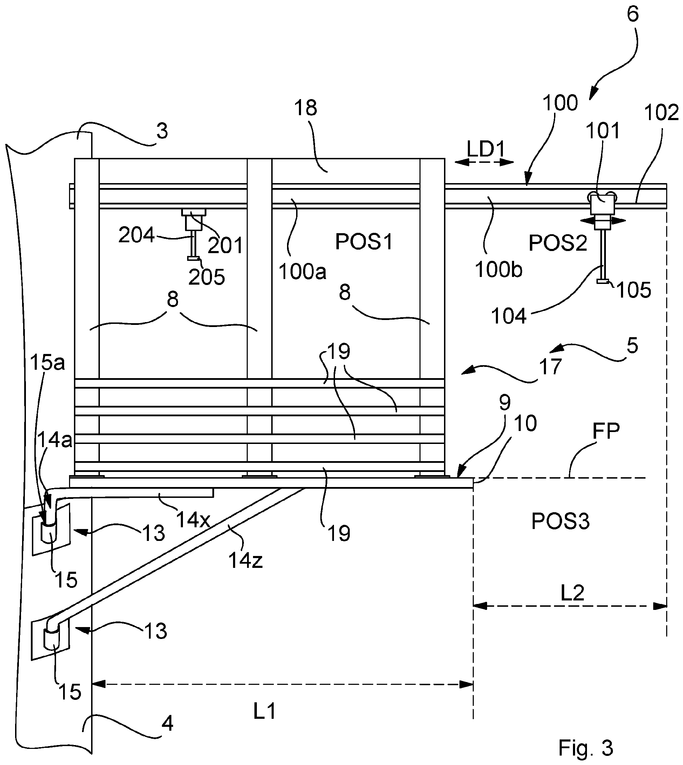

Fig. 3 illustrates, schematically and in perspective, the service platform 5 according to embodiments of the present disclosure, seen from the side.

Each of the winches 101, 201 are controllable so as to lift and lower the respective connection part 105, 205 between an upper position located above a floor plane FP (see fig. 3) defined by the upper floor surface 9a, and a lower position POS3 placed below the floor plane FP, see fig. 3.

This is provided in order to allow loading or unload service equipment 50 and/or personnel 40 connected to the connection part 105, 205 onto or from a marine vessel 30 when the crane trolley 101, 201 is placed at the second, distal boom part 100b, 200b. The respective winch 110, 210 is thus controllable so as to lift and lower the connection part to load and/or unload said equipment and/or personnel onto or from the service platform floor 9 when the crane trolley 101, 201 is placed at the first proximate boom part 100b, 200b.

The respective trolley can hence be moved between the proximate boom part and the distal boom part of the crane boom to which it is attached, along the track 102, 202. Hence, the loads connected to the connection part 105, 205 can be moved in a linear, vertical direction, and a linear horizontal direction, in order to move the lifted loads between the service platform 5 and a marine vessel.

In certain embodiments of the present disclosure, one or both crane booms 100, 200 may be configured to be displaced in a straight, linear direction sideways along the transverse beams 12 towards and away from the vertical support arrangements 8, also e.g. by means of a trolley system (not illustrated). This sideways displacement may be provided by means of one or more boom displacing units (not illustrated) such an electric motor, along the transverse beams 12. For this purpose, the beams 12 may comprise rails for guiding the boom, e.g. as may also be the case with the trolley 101, 201 that may comprise wheels for rolling on and along the track8s) 102, 202.

In other embodiments of the present disclosure, one or both of the crane booms 100, 200 may be configured to be maintained at a predefined, fixed position. The crane boom 100, 200 may here be supported by the one or more upper support parts 12 by means of a mechanical fixation connection such as one or more bolted and/or welded connections, at a predetermined fixation location so that the crane boom 100, 200 is configured to be maintained unmovable at the fixation location.

In embodiments, wherein said crane boom may be aligned with, or is configured to be displaced to be aligned with, the door entrance 11.

In case the lifted load needs to be rotated in the horizontal plane when lifted, this may be provided by allowing a certain twisting of the flexible lifting medium and/or by providing a rotatable joint at the trolley and/or at a rotatable joint provided at a lifting equipment attached to the connection part 105, 205 or provided at the connection part.

The service platform is structurally fixed to the wind turbine. This may in embodiments of the present disclosure comprise that the service platform 5 is structurally fixed, such as mainly structurally fixed, to the foundation arrangement 4 below the wind turbine tower 3 by means of one or a plurality of platform connection arrangements 13. In other embodiments, the service platform 5 may be structurally fixed, such as mainly structurally fixed, to the tower 3.

The platform connection arrangement(s) may be configured to carry at least 70%, such as at least 80%, e.g. at least 95% of the overall weight of the service platform 5 and loads such as the equipment 50 and/or personnel 40 when handled by the service crane arrangement 6 and/or supporting on the platform floor 9.

The platform connection arrangement 13 may comprise comprises a carrying structure, such as one or more connection legs 14x, 14z, extending between the service platform and the wind turbine, such as the foundation arrangement. The carrying structure 14x, 14z comprises one or more structural parts such as rods, grid structures and/or the like, that may extend from at least 1/4 , such as at least 1/3 or at least ½ of the length L1 of the platform and towards the tower or foundation arrangement. E.g. in in inclining manner.

The platform connection arrangement(s) may be configured to transfer at least 70%, such as at least 80%, e.g. at least 95% of the overall weight of the service platform, service crane arrangement and loads such as the equipment and/or personnel handled by the service crane arrangement and/or supporting on the platform floor to the foundation arrangement 4, thereby preventing these loads from acting directly on the tower structure. Hence, the foundation arrangement 4 may be configured to carry, such as directly carry, at least 70%, such as at least 80%, e.g. at least 95% of the overall weight of the service platform, service crane arrangement and loads handled by the service crane arrangement and/or supporting on the platform floor.

The platform, service crane arrangement, loads (equipment and/or personnel) carried by the crane, support frame arrangement and the like may be carried by the same platform connection arrangement(s) 13.

As illustrated in fig. 3, the platform connection arrangement 13 may in embodiments of the present disclosure comprises an angle bracket arrangement such as a shelf support bracket arrangement 14x, 14z, 15. This is preferably located below a horizontal floor plane FP - see fig. 3, defined by the upper floor surface.

The platform connection arrangement(s) 13 may comprises one or more connector parts 15 such as brackets to which a carrying structure 14x, 14z of the connection arrangement(s) is attached so that the service platform is carried by the one or more brackets. As illustrated in fig. 3, the one or more brackets 15 may comprises an upwardly facing opening 15a into which a downwardly facing connection part, such as a male part, 14a of the carrying structure extends. This may allow for installation and/or dismantling of the service platform at the offshore wind turbine as the platform may hence easily be installed by lowering the platform into/onto the brackets. In fig. 3, two connector parts 15 such as brackets are placed at each side of the platform (in this case above each other), and are each provided with an upwardly facing opening configured to receive a downwardly facing connection part 14a, such as a male part, of the carrying structure. Here, the upper connection legs 14x is connected to the upper connector part 15, and the longer, inclining connection leg 14z extends from more than half of the length L1 of the platform, and towards the lower connector part.

It is generally understood that the even though the connection legs 14x, 14z are illustrates as individual legs, these may be connected to each other in order to provide e.g. force transfers or the like between the legs 14x, 14x.

It is understood that the platform 5 may be structurally fixed to the wind turbine at a plurality of fixation points such as discrete fixation points. As can be seen from fig. 2, the platform 5 may be structurally fixated to the wind turbine at four points/areas located at the spaced apart connector arrangements 15 at these fixation points. It is naturally also understood that also one or more further platform connection arrangements 13, or alternatively fewer (such as e.g. one, two or three platform connection arrangements 13, (not illustrated) may be provided. For example placed e.g. beneath the floor and between platform connection arrangements 13 at the sides/periphery of the platform, e.g. around the centre of the width of the platform.

In some embodiments, it may be preferred that at least some of the connector arrangements 15 and carrying structure 14x, 14z may be placed beneath and/or substantially aligned with the respective vertical support arrangements, e.g. substantially as illustrated in figs. 2 and/or 3. This may e.g. be advantageous in order to provide a simple and efficient load transfer to the wind turbine when loads are lifted by the crane arrangement.

One, more or all of the fixation points may be placed at the foundation arrangement 4 at a level below the platform floor, or may be placed at the wind turbine tower, such as the lower third of the wind turbine tower, dependent on the constitution of the wind turbine. Hence, the service platform 5 may be structurally fixed, such as mainly structurally fixed, to the foundation arrangement 4 such as a transition piece or similar by means of a platform connection arrangements 13.

Said one or more brackets 15 may comprise one or more cup/bucket or pipe like bracket solutions comprising the upwardly facing opening 15a. It is generally understood that the bracket(s) 15 may comprise a rail or pipe, such as a sleeve or ring, like solution into which a connection part may be slidably engaged. When the platform is arranged at the desired location, further fixation means such as bolts (threaded or non-threaded bolts), welding, clips/hook solutions or the like may in embodiments of the present disclosure be provided to maintain the service platform in place and act as a safety measure.

The connector part 15 at the wind turbine 1 may be fixed to the wind turbine, such as a foundation arrangement of the wind turbine 4, by means of mechanical fasteners such as bolts, screws, interlocking mechanism and or the like. Additionally or alternatively, the connector part 15 at the wind turbine 1 may be fixed to the wind turbine, such as a foundation arrangement of the wind turbine 4, by means of welding and/or it may be considered an integrated part of a wind turbine component. It is generally understood that the part 15 may be provided in a part of for example the foundation arrangement 4 during manufacturing of the part of the foundation arrangement 4 designed to comprise the connector part 15. Further details and embodiments of the connection arrangement are described in relation to figs. 12-13a.

It is generally understood, that in embodiments of the present disclosure, the service platform 5 may be configured to carry a rated, such as certified, total external weight, such as provided by personnel and/or equipment, of no more than 8 ton, such as no more than 5 ton, such as no more than 3 ton, for example no more than 2 ton. The self-weight of the platform and service crane arrangement should be added thereto.

In embodiments of the present disclosure, the service platform may be configured, such as rated and/or certified, to carry a total external weight, such as provided by personnel and/or equipment, of at least 1 ton, such as at least 2 ton.

The distal part 100b, 200b of the crane boom 100, 200 may extend with a length L2 of at least 1 meter, such as at least 2 meter, e.g. at least 3 meters out over the outer edge 10, see fig. 3.

The distal part 100b, 200b of the crane boom 100, 200 may extend with a length L2 of no more than 10 meters such as no more than 5 meters out over the outer edge 10. In one or more embodiments of the present disclosure, the distal part 100b, 200b of the crane boom 100, 200 may extend between 1 meter and 10 meter, such as between 2 meters and 6 meters out over the edge 10. This may be defined between a vertical, envisaged plane defined by the edge 10, and the outer end, such as a free end, of the distal part 100b, 200b as e.g. illustrated in fig. 3. The length L2 of the part 100a, 200a of the different crane booms, 100, 200, if more than one boom is present, may be different or the same.

The service platform 5 may have a maximum length L1, extending in a horizontal direction away from and perpendicular to the tower 3 (or foundation arrangement 4), of no more than 10 meters, such as no more than 8 meters, such as no more than 6 meters or no more than 4 meters.

The overall length of the platform and the boom(s) may hence be defined as a sum of the lengths L1 and L2, see fig. 3.

As can be seen from figs. 2 and 3, the platform may comprise a railing arrangement 19 comprising one or more elongated rods or profiles. This/these may in embodiments of the present disclosure be attached to the support frame arrangement 7 of the service platform, e.g. attached directly or indirectly to the support legs 8.

This railing arrangement may act as a safety measure and/or provide other functionalities.

Generally, in embodiments of the present disclosure, the platform 5 may be configured to be entered at an entrance opening 17 placed opposite to the tower. This opening 17 may be enclosed/framed by the floor surface, a transverse support beam 12 and support legs 8 at platform sides.

Fig. 3 illustrates an embodiment of the present disclosure, where the service/working platform 5 is mainly connected to the wind turbine structure by means of a connection arrangement located below a horizontal floor plane FP defined by the upwardly facing floor surface of the floor structure when the platform arrangement is installed at the wind turbine structure. No upper platform connection arrangements are provided in this embodiment, or these may be only secondary.

However, it is understood that in other embodiments of the present disclosure, the platform connection arrangement(s) 13 may additionally or alternatively comprise upper platform connection arrangements (not illustrated) that are located above the horizontal floor plane FP and connected to the wind turbine structure above the floor plane. One two, three, four or more of the upper platform connection arrangements may be provided in various embodiments of the present disclosure. This/these may be provided as an addition to, or an alternative to the "lower" platform connection arrangement(s) 13 illustrated in e.g. figs. 2 and/or 3. Such upper platform connection arrangements may in some embodiments be attached to the upper part of the support frame arrangement 7 of the service/working platform that extends above the level of the floor plane as e.g. previously described. In some embodiments of the present disclosure, a carrying structure 14 such as one or more rods, beams or the like of such upper platform connection arrangement(s), may be attached directly or indirectly to one or more of the support legs 8 of the support frame arrangement 7. In additional or other embodiments of the present disclosure, the carrying structure 14 of the upper platform connection arrangement(s) may be attached directly or indirectly to the uppermost, interconnecting beam 18 of the support frame arrangement 7 that extends between the support legs 8 and/or to the transverse support beam(s) 12 (not illustrated in fig. 19, see e.g. fig. 2) if present.

Hence, the female part (or male part - dependent on the connection arrangement solution, see e.g. figs, 12-13) is arranged at the wind turbine structure, such as the wind turbine tower 3 at a level above the support frame arrangement 7. The carrying structure hence extends from there and towards the frame arrangement 7 and hence, the platform hangs from the upper platform connection arrangement(s).

In certain embodiments of the present disclosure, the upper platform connection arrangement(s) may act as a primary support that takes/carries at least 50%, such as at least 60% or 70% of the weight of the platform (and the material/equipment loaded thereon/hanging therefrom).

In certain embodiments of the present disclosure, the upper platform connection arrangement(s) may act as a primary support that takes/carries between 50% and 100%, such as between 50% and 95% of the weight of the platform (and the material/equipment loaded thereon/hanging therefrom).

In other embodiments of the present disclosure, the upper platform connection arrangement(s) may act as a secondary support that takes/carries less than 45%, such as less than 35% of the weight of the platform (and the material/equipment loaded thereon/hanging therefrom). The lower platform connection arrangement may in these embodiments take up the remaining part of the platform weight/load.

The upper upper platform connection arrangement(s) may be configured so that the lower part of the platform arrangement 5, such as around the floor area of the platform, provides a substantially horizontal pressure force/ pressure force component towards the wind turbine structure, as this part of the platform so to say pivots towards the wind turbine structure due to the connection point of the upper platform connection arrangement(s) that is at the wind turbine structure, such as at the tower above the frame arrangement 7.

In some embodiments of the present disclosure, the part 15 of the upper connection arrangement that is attached to the wind turbine structure 3 may be placed at least 1.5 meters above the floor plane, such as at least 2 meters above the floor plane, for example at least 3 or 4 meters above the floor plane FP. In embodiments of the present disclosure, the part 15 of the upper connection arrangement that is attached to the wind turbine structure 3 may be placed between least 1 meter and 8 meters above the floor plane FP, such as between 2 meters and 6 meters above the floor plane FP.

In some embodiments of the present disclosure, the part 15 of the upper connection arrangement that is attached to the wind turbine structure 3 may be placed at least 0.5 meters above the uppermost part of the support frame arrangement 7, such as at least 1 meter or at least 1.5 meters above the uppermost part of the support frame arrangement 7,

In certain embodiments of the present disclosure, the above mentioned upper platform connection arrangement(s) may be placed between a horizontal upper plane that is defined by the uppermost part of the support frame arrangement 7, and the floor plane FP. A lower platform connection arrangement may also be placed below the floor plane FP, but this may also be omitted according to further embodiments of the present disclosure. The upper platform connection arrangement may be attached directly or indirectly to the support frame 7.

The upper platform connection arrangement(s) described above may preferably be of the of the type comprising a male connection part and a receiving bracket with an opening for receiving the male connection part as previously described, see e.g. also figs. 12-13a.

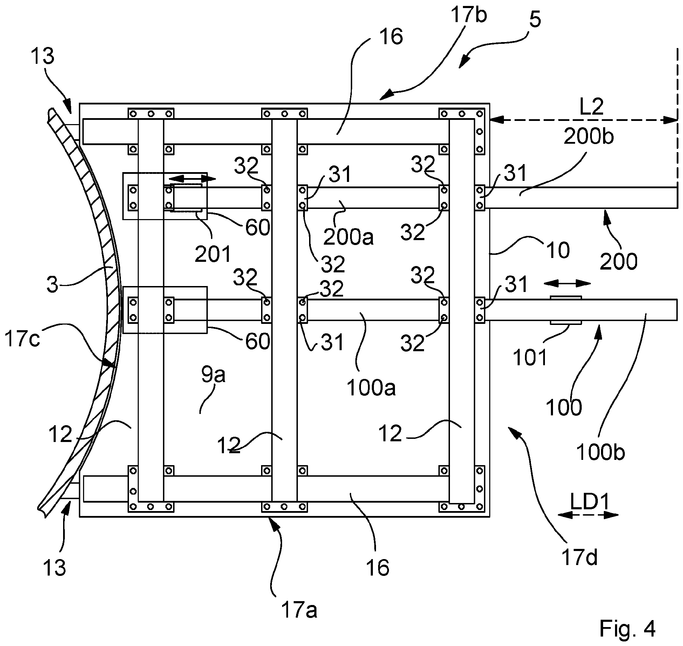

Fig. 4 illustrates schematically the platform 5 attached to the wind turbine 1 seen from above, according to embodiments of the present disclosure.

As can be seen, the floor may in embodiments of the present disclosure be adapted to the shape of the exterior periphery of the wind turbine tower or foundation arrangement 6. Hence, the platform floor may comprise a concave part proximate the tower that may be fitted so that the convex outer surface of the wind turbine can extend into the concave part of the floor.

Fig. 4 additionally illustrates that the platform comprises a first side 17c proximate the wind turbine structure (may also be denoted "tower side" or "proximate side" in this document) and a second distal side 17d arranged distal to the wind turbine structure, and platform sides 17a, 17b extending from the distal side 17d to the proximate side 17c.

As can be seen, the platform sides 17a, 17b may in an embodiment of the present disclosure be opposing and in further embodiments substantially parallel.

The support legs 8 (see e.g. previous figures) of side parts of the support frame arrangement 7 may be distributed along each of the sides 17a, 17b so that a free platform space is provided between each of the side parts of the support frame arrangement 7 where personnel and equipment can be loaded and/or where service personnel may work and stay.

The sides 17a, 17b, 17c, 17d may together describe a polygonal shape such as a rectangular shape when seen from above and extend around the periphery of the platform arrangement such as substantially around the platform floor. The sides 17a, 17b may as illustrated meet with the sides 17c, 17d at platform corners.

The outer edge 10 is placed at the distal side 17d.

Fig. 4 moreover illustrates a further embodiment where the crane trolley 103, 203 is configured to be placed underneath a weather shield 60 such as a minor roof structure and/or inside a minor housing, at least when not in use. Hence. After use, a human operator or a control system may move the trolley to be placed underneath the weather shield, e.g. proximate the tower or at another location, so as to provide weather protection of the trolley and possibly also other parts connected thereto such as lifting arrangement, and/or the drive(s) for displacing the trolley and/or operating the lifting arrangement when not in use.

The maximum area, described in a horizontal plane, of the weather shield 60 such as a minor roof structure and/or minor housing may in embodiments of the present disclosure be less than 4m2, such as less than 3 m2 Such as less than 1.5 m2, e.g. less than 1 m2. The weather shield may describe a maximum area in a horizontal plane that is not more than half, such as no more than 1/3, e.g. no more than 1/5 such as no more than 1/8 of the maximum area described by the service platform floor in a horizontal plan.

The weather shield 60 may in some embodiments merely comprise a roof structure, but in other embodiments, it may provide a housing with an opening for receiving the trolley and associated equipment, and have side walls and possibly also at least partly a bottom wall (not illustrated)

In some embodiments of the present disclosure, a minor roof structure, such as a roof structure of the weather shield, may be placed at a permanent location, e.g. close/proximate to the wind turbine, or may alternatively be arranged to move together with the trolley or placed permanently at another location along the respective boom 100, 200.

In certain embodiments of the present disclosure (not illustrated in fig. 4), the weather shield may be omitted and the proximate part of the boom may extend into the wind turbine through an opening, and hence the trolley may be placed/moved inside the wind turbine, e.g. when not in use.

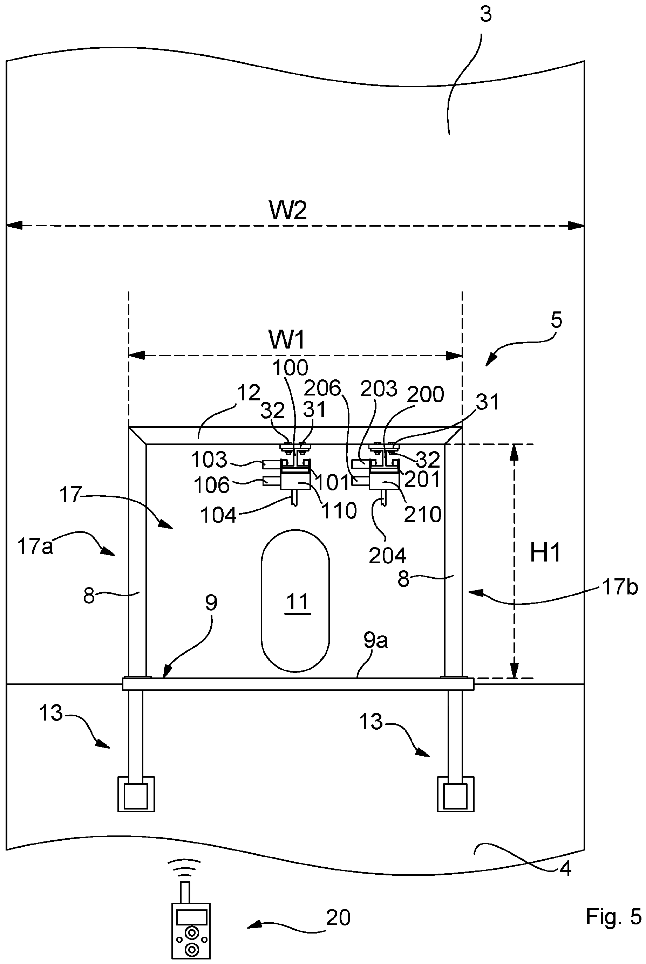

Fig. 4 additionally illustrates a further embodiment where the crane boom 100, 200 is connected to the transverse support beams by means of a crane boom bracket 31, see also fig. 5. The crane boom bracket 31 may e.g. comprise a plate or another suitable type of bracket that is connected, such as welded and/or bolted onto the transverse support beams 12. The crane boom bracket 31 may be directly or indirectly connected to the respective transverse support beam. The crane boom 100, 200 is then connected to the transverse support beams by connecting the boom to the crane boom bracket 31, preferably by means of mechanical, releasable fixation means such as comprising one or more of blots, a clips system, a clamping system and/or the like.

Fig. 5 illustrates schematically a service platform 5 according to embodiments of the present disclosure, seen in a front view.

The service platform 5 has a maximum width W1 extending horizontally and in a direction transverse to the longitudinal direction of the tower 3. The maximum width W1 of the service platform is smaller than the width W2, such as the diameter, of the tower 3, at least at the location opposite to the service platform 5.

The maximum width W1 of the service platform 5 may in embodiments of the present disclosure be at least 5%, such as at least 10%, for example at least 20% or 30% smaller than the width W2 of the tower.

The maximum width W1 of the service platform 5 may in embodiments of the present disclosure be no more than 10 meters such as no more than 8 meters, for example no more than 6 meter. In certain embodiments, the maximum width W1 of the service platform 5 may be no more than 5 meters such as no more than 4 meters.

In some embodiments of the present disclosure, the maximum length L1 and maximum width W1 of the service platform may vary less than 2 meters such as less than 1 meter, e.g. less than 0.5 metres. In some embodiments, width W1 and L1 may be substantially identical.

The maximum width W1 of the service platform 5 is determined/defined between the opposing platform sides 17a, 17b extending from said distal side to said proximate side.

The platform also comprises an interior height H1 extending between the upper floor surface 9a and the lower surface of transverse support beams 12. The height H1 may in embodiments of the present disclosure be at least 2 meters such as at least 2.5 meters, e.g. at least 3 meters or at least 4 meters. The height H1 may e.g. be between 2 meters and 8 meters, such as between 2 meters and 6 meters or between 2 meters and 5 meters.

It is generally understood that the service platform according to embodiments of the present disclosure may be considered as an external add-on to the wind turbine rather than being integrated in the wind turbine tower/foundation arrangement structure. The service platform may e.g. be mounted during installation of the wind turbine or after the wind turbine has been installed. The wind turbine may hence merely be approached by a marine vessel or another suitable type of vessel, and a crane arrangement or the like may lift and move the service platform towards the tower and the service platform is then attached to the platform 5 by means of the platform connection arrangement 13. This may in certain embodiments be provided by lowering the platform so that the downwardly facing connection part engages with an upwardly facing opening of the connection part. However, any other suitable types of connection means, such as mechanical connection means such as bolts, clamps, hook connections or the like, may additionally or alternatively be utilized for connecting and fixating the platform to the tower. It is understood that the boom(s) 100, 200 and trolley etc. may be pre-installed already when the platform is mounted on the wind turbine. In other embodiments, these components may be installed after installation of the platform, e.g. by means of connecting the boom(s) 100, 200 to crane boom brackets, and then provide the trolley.

Fig. 5 illustrates a further embodiment of the present disclosure, where the drive arrangement 103, 203 comprising a drive unit for displacing the crane trolley along the respective crane boom is located at and moves together with the crane trolley.

Moreover, Fig. 5 illustrated an embodiment of the present disclosure wherein the winch 110, 120 is attached to the crane trolley 101, 102 to be displaced together with the crane trolley. Here, the drive unit 106, 206 for driving the winch may also, in further embodiments be located at and move together with the crane trolley. In other embodiments, the winch may be located (not illustrated in fig. 5) at another, e.g. fixed, location such as proximate the wind turbine or inside the wind turbine with the wire extending from the interior of the wind turbine and to a pulley or the like at the trolley.

One or both of the drive unit of the drive arrangement 103, 203 and the drive unit for driving the winch may comprise an electric motor, such as a 1 or 3 phase electric AC motor. In some embodiments, one or both of the drive unit 103, 203 and 106, 206 may comprise a DC motor. In some embodiments, one or both of the drive unit 103, 203 and 106, 206 may comprise an electric stepper motor or an electric servo motor. In other embodiments, one or both of the drive unit 103, 203 and 106, 206 may comprise another type of drive unit such as e.g. a hydraulic or pneumatic motor.

Figs 6. 6a and 6b illustrates schematically different embodiments of a control system 300 for controlling the crane arrangement according to embodiments of the present disclosure. The control system 300 is configured to control the operation of the cane arrangement, at least partly based on user input from a human user, such as provided by means of a remote control. The remote control 320 may e.g. be placed on the marine vessel. Additionally or alternatively, a remote control 320 may be located at the wind turbine such as at or near the platform 5.

In fig. 6a, the control system 300 comprises a common control unit 310 for controlling the winch and trolley positioning at both crane booms. The controller hence is configured to output/transmit wired and/or wireless command signals to units 103, 203, 106, 206 at different crane booms. The control unit 210 may be located at the wind turbine such as covered by a weather shield as previously explained, it may be located inside the wind turbine or it may be located at another position at the wind turbine, such as e.g. attached to the support frame arrangement 7 or the like.

A user at a marine vessel may operate a remote control 320 to control one or both of the winches 110, 210 and position of the trolley 201, 101.

Hence, the user may operate the position of the first trolley 101 and the first winch 110 by controlling one or more control means of the remote control 320 such as one or more joysticks and/or buttons on the remote control while the second trolley 201 and the second winch 210 are kept still/uncontrolled. Additionally, the user may operate the position of the second trolley 201 and the second winch 210 by controlling one or more control means of the remote control 320 such as one or more joysticks and/or buttons on the remote control while the first trolley 101 and the first winch 110 are kept still/uncontrolled.

The control system 300 may, in embodiments of the present disclosure, be configured to facilitate a "synchronized" control mode where both of the trolleys 201, 101 and/or both winches 110, 210 are controlled simultaneously in order to e.g. lift a common load by means of both flexible lifting mediums 104, 204. Hence, here, the control system 300 may be configured so that it may e.g. align the trolleys, so that these together may lift a common load, and/or may be configured so the trolleys are moved simultaneously and with the same speed along the booms 100, 200, when an operator operates control means of the remote control 320 such as a single joystick and Or buttons configured to operate the common control mode. Additionally, or alternatively, to common control mode may comprise a simultaneous lifting and lowering of the flexible lifting mediums with the same movement speed to lift and lower the common load. In the common control mode, a common lifting equipment such as a harness, a frame or the like may be connected to both connection parts 105, 205 that are connected to the respective flexible lifting mediums 104, 105. The common load may in embodiments of the present disclosure be equipment or a person.

Fig. 6b illustrates a control system according to embodiments of the present disclosure. Here, the control system 300 comprises individual controllers 310. Hence a first controller is configured to transmit command signals to units 103, 106, associated with the first boom 100 in order to control the winch 110 and trolley 201. The control unit. The control system additionally comprises a further, second controller is configured to transmit command signals to units 203, 206, associated with the second boom 200 in order to control the winch 210 and trolley 201. Hence, the user may operate the position of the first trolley 101 and the first winch 110 by controlling one or more control means of the remote control 322, and this is provided by means of/through the first controller. Additionally, the user may operate the position of the second trolley 201 and the second winch 210 by controlling one or more control means of the remote control 320, and this is provided by means of/through the further controller. Hence, one controller may be independent of the operational state of the other controller.

In certain embodiments, the remote control 320 may however be equipped with control software and other means, that may in some embodiments enable a common control mode as e.g. described above by transmitting control signals to both control systems 310 as shown in fig. 6b.

In some embodiments, the remote control 320 may be configured to operate one trolley and winch associated with one of the crane booms 100, 200. Another remote control, e.g. located at the platform or at the wind turbine interior or exterior the like, may be associated with controlling the winch and the like associated with the other of the crane booms. The latter remote control may be designed so that it should not be removed from the platform or wind turbine exterior/interior, e.g. by wiring and/or other fixation means. Hence, a user may enter the platform by means of first crane boom by operating trolley and winch of one of the crane booms from the vessel by means of a remote control, and first upon entrance on the platform, the control of the trolley and winch of the other crane boom may be possible by means of a remote control dedicated thereto.

In other embodiments, a common remote control, or two different remote controls, located at the vessel may be used for operating the winches and trolleys associated with both crane booms from the vessel upon arrival at the wind turbine.

It is generally understood that the controller(s) 310 may comprise a computer processor CP and a data storage DS comprising a computer program code. The processor CP executes the code in the data storage DS to operate the drive unit(s) for driving the winch and the drive unit(s) for moving the trolley along the crane boom. The controller 310 may also comprise a suitable communication interface, e.g. such as a wireless communication interface and/or a wired communication interface, designed to enable receipt of control signals from a remote control 320, and the computer processor CP acts upon the received control signals and controls the winch(es) and trolley(s) based on the received control signals and the software program code in the data storage DS. The software program code may comprise a set of predefined rules that determines how and/or when the computer processor should provide control signals to the units 103, 203, 106, 026 configured to be controlled by the respective controller 310. It is understood that some of the control may be provided at the drive units themselves, e.g. in case the drive unit comprises a stepper motor or a servo motor, the drive units may receive set points, and act accordingly e.g. with regard to speed and/or distance and/or torque.

The crane arrangement may in embodiments of the present disclosure comprise one or more load determining means for determining the weight of the lifted load directly or indirectly, and this may also provide input to the control system 300. The one or more load determining means may comprise one or more of a strain gauge solution, a torque measuring unit (e.g. implemented in a drive unit 103, 106, 206, 206) and/or the like. Hence, if the weight of the load to be lifted exceeds a threshold set in the software code, the computer processor will assure that the related crane will not operate, and information may be transmitted to the remote control and presented on a screen so that the user knows that the load to be lifted is to large. This may e.g.be provided so that a crane boom configured as a personnel crane has a lower weight set point than the other crane that is dedicated to lift equipment.

The feature of determining the load to be lifted may also be used in case the crane arrangement comprises more than one crane boom, winch and the like as previously explained, and these are used simultaneously to lift a common load such as personnel and/or equipment. The control system 300 may here act on weight input to assure proper control of the winches to lift the common load.

In some embodiments, in case the common load may be personnel, a first of the winches and booms and flexible lifting mediums may act as a primary lifting equipment for the personnel. However, the control system 300, 320 may also operate the other of the winches at the other crane boom to act as a secondary/backup lifting equipment so that the weight lifted by the other flexible lifting medium is reduced compared to the weight lifted by the first flexible lifting medium. This may be based on the weight information and/or position information obtained from sensors. Hereby, the other flexible lifting medium act as a backup providing redundancy in case failure occurs when lifting by means of the primary lifting equipment. This may also be provided in further or alternative embodiments hen lifting equipment 50.

It is understood that the primary lifting equipment may lift at least 60%, such as at least 80%, for example at least 99% of the weight of the lifted load. The secondary lifting equipment may be controlled by the control system based on the software and rules of the data storage DS by controlling the winch of this equipment so that it is kept at least partly tensioned and does not kept too slack so that in case the primary lifting equipment fails and the first flexible lifting medium unintentionally unwinds, the lifted common load does not experience any, or experiences at least only a limited, sudden lowering as the secondary lifting equipment takes over the lifting.

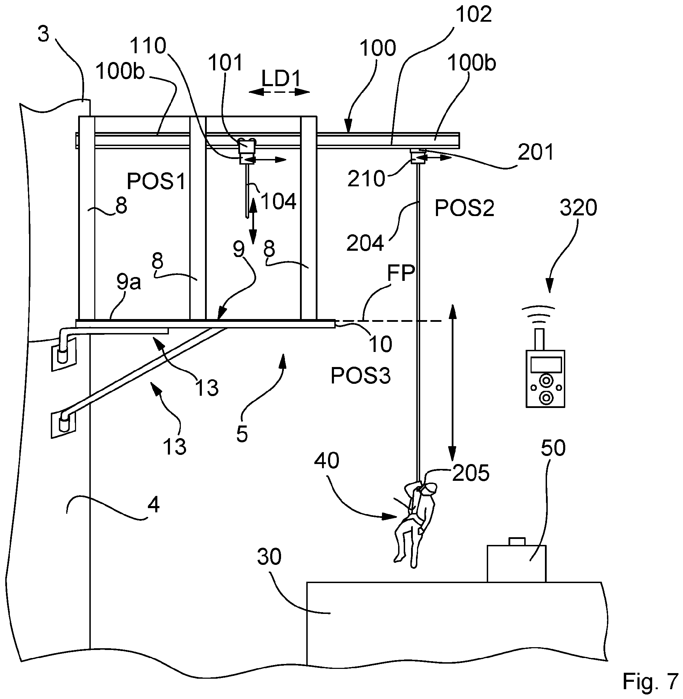

Fig. 7 illustrates an embodiment of the present disclosure where personnel 40 is lifted by the crane arrangement 6. As previously mentioned, and as illustrated in other figures too according to the present disclosure, the crane arrangement 6 may comprise two cranes comprising each their crane boom 100, 200, each their trolley and 101, 201, and each their flexible lifting medium 104, 204 controlled by a winch 110, 210.

Hence the first crane comprising the first crane boom 100 may in embodiments of the present disclosure be a crane dedicated to be an equipment crane boom for use during transport of equipment 50 between the marine vessel 30 and the service platform 5, such as tools, spare parts, and/or other relevant equipment for use by personnel 40 during service at the wind turbine 1.

The second crane boom 200 (in fig. 6 hiding behind the first crane boom 100) may be a dedicated personnel crane boom for use during transport of personnel between the marine vessel and the service platform 5.

In other embodiments, the functionality of the cranes may be switched so that the crane boom 100, trolley 101 and lifting medium 104 are for lifting personnel, whereas the crane boom 200, trolley 201 and lifting medium 204 are for lifting equipment.

The weight of the equipment 50 to be lifted by the equipment crane boom may be between e.g. 0-4000 kg such as 0-3000 kg, and often above 500 or 1000 kg, in some situations even more than 3000 kg.

The weight of the personnel 40 to be lifted may generally not surpass 300 kg, such as not surpass 200 kg or 150 kg including clothes, safety equipment, and some general tools and/or other equipment carried by the personnel her/himself. However, the weight of a personnel lifting device 20 such as comprising a harness, a lifting frame such as a personnel cage, personnel platform or personnel chair like device, that in embodiments of the present disclosure may be used to be connected to the connection part 105, 205 and so that the personnel 40 can be lifted by the personnel lifting device 20 so that the person can be lifted by the crane, may in embodiments of the present disclosure be added to that weight of the personnel. In case multiple persons are lifted at one, the said personnel weight may raise, e.g. if two or three persons are lifted simultaneously, the personnel weight may be between 160 kg and 900 kg, such as between 200 kg and 600 kg compared to the persons own weight and the equipment lifted by the person. In some situations the person may also bring one or more toolboxes (not illustrated) or the like when lifted by the crane.

It is generally understood that one or more of the first and second crane booms 100, 200, see e.g. figs 2-5, the first and second trolley 110, 210, winches and/or the like may vary in size, type and/or rated handling weight. Alternatively one or more of these may be of substantially the same configuration with respect to one or more of e.g. size, type and/or rated or certified handling weight.

In fig. 7, the wind turbine 1 has initially been approached by the marine vessel 30. Then a user operates the remote control 320 to operate a crane trolley 101, 201 by means of the drive arrangement 103, 203 to place the crane trolley at the second, distal boom part 100b, 200b. This may be obtained by establishing a wireless communication link between the remote control 320 and a control system 300 as e.g. described above in relation to figs. 6a and/or 6b. A lamp or the like at platform 5 or wind turbine 1 may indicate that a proper communication link is established, and/or this information may be provided at the remote control at a screen or by means of another visual indicator.

Then, the user at the marine vessel operates the remote control 320 in order to move/position the trolley at the distal part 100b of the crane boom 200. This may in other embodiments be provided automatically by the control system upon establishing of the communication link, according to the program code as previously described in relation to figs. 6a, 6b. This may also act as a visual indication that a communication link has been established. Then the user operates the remote control to operate the flexible lifting medium 204 and connection part 205 to lower these from a position POS2 above the floor plane to a position POS3 below the floor plane FP and towards the marine vessel 30 by means of the winch 210, while the crane trolley is placed at the second, distal boom part 200b.

Some security software of the software in the data storage and/or mechanical security solutions, may in embodiments of the present disclosure prevent the trolley 201 from being moved to the first position POS1 above the platform floor 9 while the trolley is placed at boom part 100b and the connection part 205 is determined to be below the floor plane FP. This may e.g. be determined by determining the degree of unwinding of the winch 205 by information provided by the drive unit itself (such information may be directly or indirectly available in stepper motors or servo motors, it may be information calculated/monitored by the control system 300, and/or it may be obtained by means of sensor solutions such as optical, magnetic sensors.

Then the personnel lifting equipment 20 is attached to the lowered connection part 205, and the personnel 40 such as a single person or alternatively multiple persons in case the personnel lifting device 20 facilitates this, are lifted vertically from the marine vessel 30 by operating the remote control. A person at the marine vessel may control the lifting and/or the lifted person may bring a remote control to control the lifting him/herself. A further remote control may be maintained at the marine vessel for safety in case unintended events happens, such as the lifted person(s) getting ill or hurt, or a remote control 320 stops working.

When the lifted personnel 40 has been lifted to the position POS2 above the floor plane FP by means of the winch 210, the crane trolley is operated by means of a drive arrangement so as to move the crane trolley 201 and thereby the personnel 40 to a position above the floor. It is generally understood that all the personnel lifting may be provided by substantially linear vertical and horizontal movements of the lifted loads.

In some embodiments of the present disclosure, if several, such as two crane booms are provided in the crane arrangement 6, a first crane boom 100, first crane trolley 101, first flexible lifting medium and a first winch 110 may be used for transporting equipment 50 between the service platform 5 and the marine vessel 30. In certain embodiments, this crane may be a dedicated equipment crane that is assigned for only lifting equipment during at least normal operation. A second crane boom 200, second crane trolley 201, the second flexible lifting medium 204 and second winch 210 may be used for transporting personnel 40 between the service platform 5 and the marine vessel 30. In certain embodiments, this crane may be a dedicated personnel crane that is assigned for only lifting personnel 40 during at least normal operation. In some embodiments the personnel crane may act as the primary crane lifting the personnel, and a second, backup may be provided by the equipment crane that may also be arranged to lift the personnel in case failure or the like occurs at the personnel crane. Hence, the control system 300, 320 may operate the winch of the equipment crane so that the weight lifted by the equipment crane is reduced compared to the weight lifted by the personnel crane. A winding of also the winch of the equipment crane may however be provided by the control system 300, e.g. in a manner synchronized with the operation of the winch of the personnel crane in order to avoid too much slack when lifting the personnel from the marine vessel 300 and to the platform. Additionally, the control system may naturally also automatically unwind the winch of the equipment crane, or the winch may be arranged in an idling mode, when lowering a person towards the marine vessel. In case of an idling mode, a breaking system may be provided so that a sudden failure in/at personnel crane, such as a winch or motor failing, will prevent the winch of the equipment crane from idling and unwind unintentionally due to the weight of the lifted load.

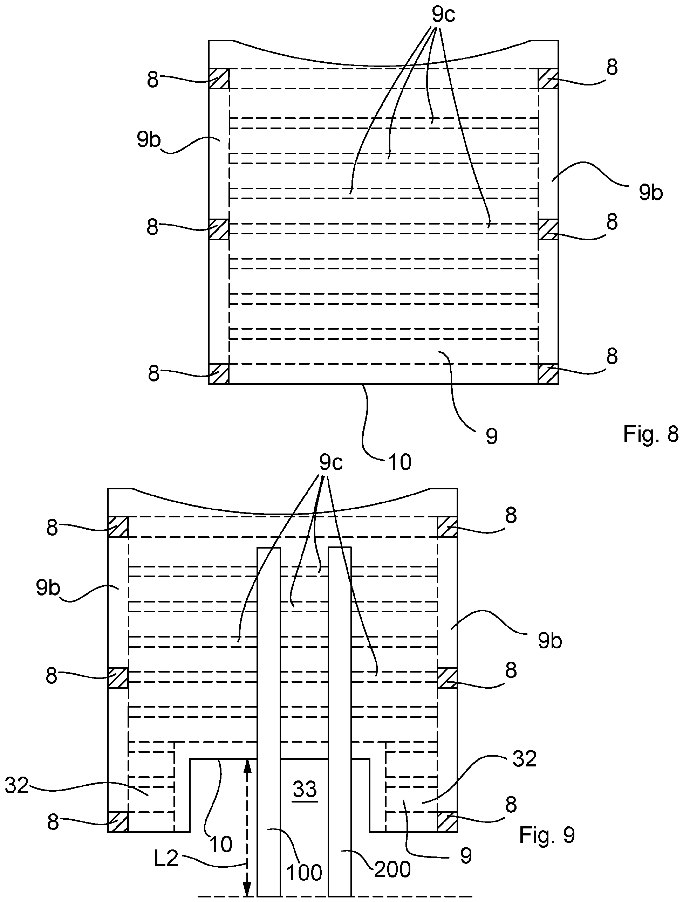

Fig. 8 Illustrates an example of a floor structure according to embodiments of the present disclosure, seen from above. As can be seen, the flooring 9 may rest o floor beams 9c. The floor beams extends in a transverse direction of the floor between sides of the service platform, between floor carrying structures 9b, such as floor beam carrying structures 9b, such as girders, such as comprising one or more of an H-, I-, T-, or box-beam. The floor carrying structures 9b may in embodiments of the present disclosure be arranged below the vertical support arrangement 8 such as the support legs that carries the one or more upper support parts 12. Additionally, or alternatively, the platform connection arrangement 13 may in embodiments of the present disclosure be arranged below, or at least connected directly or indirectly to, the floor carrying structures 9b

Fig. 9 illustrates an embodiment of the present disclosure, wherein the outer edge over which at least one of the beams 100, 200 extends, is arranged at a recessed portion of the service platform floor to provide a space between side parts 32 of the service platform floor 9, and the equipment and/or personnel may be transported in the recess space 33 in the vertical direction. At least one of the transverse support beams 12 carrying (a part of) one or more crane booms 100, 200 may in further embodiments (not illustrated) be arranged above the said space 32 provided by the recessed portion of the floor, in order to support the one or more crane booms near the location where the trolley 101, 201 may be arranged when lifting/lowering the equipment and/or personnel towards and from the marine vessel. A user may stand at the floor parts 32 during operation of the equipment crane, e.g. while being secured to a railing, see figs 3 and/or 2.

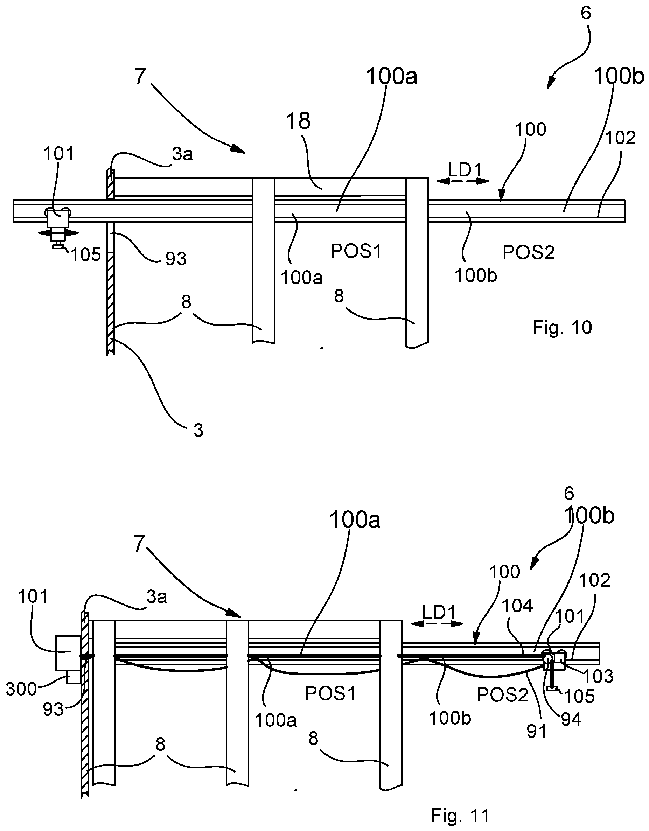

Fig. 10 illustrates schematically an embodiment of the present disclosure wherein the trolley 101, configured to move in the longitudinal direction LD1 of a crane boom along a track 101 of the crane boom may be moved from the exterior of the wind turbine above the platform floor, and into the interior of the wind turbine 1 through an opening 93 in the wall 3a, such as an opening in an exterior wall of the wind turbine, such as a tower wall, transition piece wall, or another wall of the foundation arrangement when not in use for lifting equipment or personnel. It is understood that the control system 300 as previously explained may be placed at the trolley or maintained inside the tower. This may e.g. help to provide that the wind turbine acts as a weather shield when the crane arrangement is not in use, as the trolley (and other crane components such as winch, may hence be protected from the weather inside the wind turbine.

In some additional or alternative embodiments, the trolley and the boom inside the wind turbine may be used for lifting and possibly also transportation tasks inside the wind turbine.

In some embodiments, a door, gate or the like (not illustrated), such as a door configured to move in one or more directions, such as a door arranged to be displaced parallel to a plane defined by a major surface of the door, or to be opened as a conventional door or a revolving door, may be openable and closeable, so that in the open position, the trolley can pass through the opening 93, and in the closed position it may provide a weather shield so that the amount of water, moist and the like that can enter into the wind turbine through the opening 93 is reduced compared to if the door is maintained in the open position.

In some certain embodiments of the present disclosure (not illustrated), the opening 93 may be provided by the door entrance 11, such as the opening 93 may be integrated in the door entrance 11, such as in the upper part of the door entrance. This may e.g. enable transportation of lifted loads, such as equipment, through the door opening from the exterior to the interior of the wind turbine and vice versa through the door entrance by means of a crane boom of the crane arrangement. This crane boom may in embodiments of the present disclosure as e.g. illustrated in some of the figures described above be a crane boom 100, 200 that comprises the distal part 200b, 100b, and the proximate part 200a, 100a as previously disclosed.

Fig. 11 illustrates schematically an embodiment of the present disclosure wherein the winch 110 is maintained in a fixed position inside the wind turbine such as inside a transition piece or inside the tower. The flexible lifting medium 104 hence extends from the winch 110 and to a "passive" pulley 94 at the trolley 101, and is suspended therefrom to the connection arrangement 105. The control system 300 may be configured to operate/synchronize the movement of the trolley 101 and the winch 110 so that a movement of the trolley automatically is compensated for by winding and unwinding the lifting medium 104 by means of the winch 110, in order to reduce or substantially prevent a variation of the vertical position of the connection part 105 when moving the trolley along the boom 100 in the longitudinal direction LD1 along the track 102. The winch 110 arrangement in fig. 11 may alternatively in further embodiments of the present disclosure be arranged stationary (not illustrated) outside the wind turbine, e.g. hanging from an upper support part 12, attached and fixated to the crane boom 100 or attached to the wind turbine wall 30a. Here the winch may be kept stationary proximate the wind turbine tower or the like in order to make a larger part of the boom available for the trolley 101.

For powering the drive arrangement 103 such as a motor for displacing crane trolley along the track, an electrical cable 91 may in embodiments of the present disclosure extend from the control system 300, e.g. from the interior of the wind turbine. Alternatively, the drive arrangement 103 may be battery powered in other embodiments of the present disclosure.

In case the winch 101 is instead configured to move along the boom (as in e.g. fig. 10), an electric cable (not illustrated) may extend from the trolley 101 to the power source too, or alternatively this may also be battery powered. The electric cable may be configured to be communication medium for control signals from the control system, and/or may comprise wires that are configured to be a permanent power source, e.g. in case control circuitry of the control system 300 is placed at or near the trolley 101. Here, a permanent power source may be considered permanent as in that the electrical power is substantially continuously available or at least available when the crane system is in an ON/active mode, such as upon or substantially after establishing a communication link between a remote control and the control system that may turn the crane arrangement on for operation. Such cables may be configured to hang from and guided by suitable movable guides arranged along the track 102 or in any other suitable way, e.g. guides placed along a separate carrying structure that is separate to the boom and e.g. connected to one or more upper support parts 12 (se previous figures.), or arranged along another part of the boom 100

It is understood that if several crane booms 100, 200 are provided as e.g. previously described, one or more of the embodiments described in relation to e.g. fig. 10 and/or 11 may apply for one or both cranes provided by means of the crane booms. Hence, e.g. only one of the crane booms may extend into the tower whereas the other may not. Additionally or alternatively, one of the trolleys, such as an equipment crane trolley, may be arranged to move into the tower whereas the other may not, but may e.g. in further embodiments be arranged under/in a weather shield 60 arranged external to the tower. In some embodiments, one of the winches 110, 210 may be placed external, to a first trolley at a first boom 100, 200, e.g. at a fixed position, whereas the other winch may be configured to be placed at and/or move together with the trolley 101, 201 at another crane boom. It may though be preferred that both winch solutions may be substantially the same as this may be advantageous from a spare part point of view.

Fig. 12 illustrates schematically and in perspective an installation of a platform 5 according to embodiments of the present disclosure, where a platform 5 is installed by means of a connection arrangement 13 at the wind turbine. In the illustrated embodiment of fig. 12, the crane arrangement 6 is omitted. This crane arrangement may either continue to be omitted dependent on the intended usage of the platform 5 after installation, but it may alternatively also be installed later on. In still further embodiments, the crane arrangement may be arranged at the platform already at the time of installation of the platform 5 at the wind turbine site.

As previously described, the platform is connected to the wind turbine by means of the connection arrangement(s) 13. The platform connection arrangement 13 comprises connector parts 15, such as brackets, on the wind turbine. Moreover, the connection arrangement 13 comprises one or more carrying structures 14x, 14z placed on the platform and firmly attached to the platform. These carrying structures 14x, 14z may be placed below the wind turbine floor and attached to e.g. a floor frame arrangement 9b, or 9c (see also figs. 8-9) of the platform. However, it is understood that the carrying structures 14x, 14z may be connected to any suitable frame part of the platform 5 in order to assure sufficient strength and/or stability.

The one or more connector parts 15 may as illustrated be hollow, such as comprise sleeves, and provide an upwardly facing opening 15a into which a downwardly facing connection part 14a, such as a male part, of the carrying structure 14x, 14z is arranged to extend after platform installation. Hence, the platform 5 may be installed by lowering the platform 5 into/onto the brackets by means of a crane from which the platform hangs, e.g. by means of wires or chains 80 or by another suitable device for use during installation of the platform at the wind turbine site.

In fig. 12, two connector parts 15 each comprising a sleeve with the opening 15a are placed above each other (see also previous figures) at a side of the platform, and are each provided with an upwardly facing opening configured to receive a downwardly facing connection part 14a comprising a male part, of the respective carrying structure 14x, 14z of the platform, which may e.g. be connection legs or another suitable frame structure.

During installation, the platform 5 is lowered by a crane or the like, so that the downwardly facing connection parts 14a, such as a male part extends into the opening 15a. An aligning of the respective connection part(s) 14a and opening(s) 15 may be provided prior to lowering the platform.

The upper connection leg(s) 14x may be connected to the upper connector part 15, and the longer, inclining connection leg 14z may extend from more than half of the length L1 of the platform, and towards the lower connector part. It is generally understood, as also previously stated, that the even though the connection legs 14x, 14z are illustrates as individual legs, these may be connected to each other in order to provide e.g. force transfers or the like between the legs 14x, 14x. The lower leg 14z may additionally or alternatively be connected/attached to the frame of the platform at a plurality of locations along the leg 14z, e.g. by means of beams (not illustrated) or the like.

Figs. 12a-12b illustrates schematically a cross sectional view of the connector part 15 in the form of a sleeve, after platform installation, according to embodiments of the present disclosure. Here it can be seen that the connection part 14a, here comprising a male part, of/at the platform 5 extends into the upwardly facing opening 15a of the sleeve. In fig. 12a, the connection part 14a extends through a lower opening of the connector part 15 too, as the sleeve is open at the bottom and hence comprises a through hole through which the connection part 12a can extend so that the free end 14a1 of the male part 14a extends to a position outside the sleeve interior. The connection part 14a may comprise or be hook shaped or the like as e.g. illustrated with a downwardly facing free end 14a1.

In fig. 12b, the sleeve comprises a bottom wall 15z, and the free end 14a1 hence is maintained in the sleeve interior. The bottom wall 15z may in further embodiments comprise one or more drain openings for drainage of water (not illustrated). In some embodiments, the free end 14a1 may support at the bottom wall 15z after platform installation, in other embodiments, the free end 14a1 may be maintained with a distance to the bottom wall 15z after platform installation

Fig. 13 illustrates an schematically and in perspective installation of a platform 5 according to further embodiments of the present disclosure, where a platform 5 is installed by means of a connection arrangement 13 at the wind turbine. In fig. 13, the one or more connector parts 15 such as sleeve(s) may be hollow and here be arranged at the platform instead of on the wind turbine as illustrated in fig. 12.

Here, the connector parts 15 comprises a downwardly facing opening 15a into which an upwardly facing connection part 14a, comprising a male part, of a bracket at the wind turbine is arranged to extend after platform installation. Hence, the platform 5 may be installed by lowering the platform into/onto the connection part 14a by means of a crane from which the platform hangs, e.g. by means of wires or chains 80 or by another suitable device for use during installation of the platform at the wind turbine site.

In fig. 13, two connector parts 15 are placed above each other, and each comprising the sleeve such as a ring or pipe are placed at e.g. a side of the platform. These are each provided with the downwardly facing 15a opening configured to receive an upwardly facing male part 14a that is firmly attached/secured to the wind turbine. The upwardly facing connection part 14a may e.g. be in the shape of a hook or the like as e.g. illustrated and comprises an upper free end 14a1 of a male part for extending into the downwardly facing opening 15a when lowering the platform 5 to be mounted on the wind turbine.

During installation, the platform 5 is lowered by a crane or the like, so that the upwardly facing connection parts 14a extends into the downwardly facing opening 15a as e.g. illustrated in fig. 13a.

Fig. 13a illustrates schematically a cross sectional view of the connector part 15 with a downwardly facing opening 15a receiving the connection part 14a, comprising a male part, after platform installation, according to embodiments of the present disclosure. It can be seen that the free end 14a1 extends into the opening 15a and that the sleeve encloses the male part 14a. In fig. 13, the sleeve comprises an upper bottom wall 15z, this may cover the free end 14a1 partly (if it comprises one or more through holes) or fully (if the wall 15z is impermeable to water and thus comprises no through holes as illustrated in fig. 13a) after platform installation.

In further embodiments (not illustrated) the end wall 15z may substantially be omitted from the sleeve(s) 15 at the platform (fig. 13a and 13), and may comprise an upper opening through which the free end 14a1 also extends, e.g. like in fig. 12a.

In still further embodiments of the present disclosure, it is understood that the connection arrangement 13 may comprise a combination of the connection solutions illustrated in figs. 12 and 13, so that sleeves are both provided at the platform 5 and at the wind turbine, and the same applies for the connection part(s) 14a, so that one or more fixed connection parts 14a, such as male parts, at the platform comprises free ends 14a1 extending into upwardly facing openings of first types of sleeves (see fig. 12) at the wind turbine, and so that one or more other connection parts 14a, such as male parts, at the wind turbine comprises free ends 14a1 extending into downwardly facing openings of sleeves at the platform.

In some embodiments, as e.g. illustrated in for example fig. 2 and indicated in figs. 13 and 12, the platform 5 may be designed hang from the platform connection arrangement 13 in a system that may be considered a shelf support solution.

It is generally to be understood that in some embodiments of the present disclosure, further securing of the platform 5 to the wind turbine may be provided. This may e.g. comprise providing safety measures such as a locking system for ensuring that the connection parts cannot be lifted out of the sleeves by e.g. waves or sudden upward pushes on the platform from a crane or vessel. These safety measures may comprise installation of bolts or screws, pins or the like on the connection arrangement.

Additionally or alternatively further safety measures (not illustrated) may be provided to enable installation of safety measures that are easily viewed and serviced when standing on the platform. For example, one or more sleeve and connection part solutions as already previously described may be provided within range of a user when the user stands on the platform, and this/these may facilitate installation of mechanical safety measures such as a locking system or the like that substantially prevents removing/lifting the platform 5 from the wind turbine again without unlocking and/or removing the safety measures. Hence, also after the platform is installed, a user may install/activate the safety measures to firmly secure the platform to the wind turbine.

It is generally to be understood that the service platform may be structurally fixed, such as mainly structurally fixed, to the wind turbine tower 3 or to the foundation arrangement (4) a by means of the platform connection arrangement(s). In the embodiments of figs. 12 and 13, the service platform 5 is structurally fixed, such as mainly structurally fixed, to the foundation arrangement, such as a transition piece or the like. Figs 12a, 12b and 13a suggests that the part(s) of the platform connection arrangement 13 at the wind turbine comprising the part(s) 14a, 15 to which the connection arrangement 14a, 15 of the platform is to be connected may be placed at the foundation arrangement 4 or the wind turbine tower 3 such as the wind turbine tower wall.

In some further embodiments (not illustrated), some parts of the platform connection arrangement may be placed at the tower 3 and other at the foundation arrangement 4, so that the platform is connected to both the foundation arrangement 4 and the wind turbine tower at/in the transition area 90 between the foundation arrangement and the tower. Such a transition area may e.g. comprise or be at opposing sides of flanges of the tower and foundation arrangement that interconnects the tower 3 and foundation arrangement 4.

It is generally to be understood that the cross sectional shape of the opening 15a of the receiving bracket 15, such as the opening in a sleeve, may be circular or oval, or of another cross sectional shape such as a polygonal shape, e.g. rectangular, pentagonal or hexagonally shaped and/or the like. The cross sectional shape of the male part 14a may correspond to the cross sectional shape of the opening 15a, or may be different therefrom.

It is to be understood that in some embodiments of the present disclosure, the part of the platform connection arrangement 13 that is fixed at the wind turbine structure, such as the receiving bracket 15 or a bracket solution comprising the male part 14a may be welded, bolted or in other suitable ways securely attached to the wind turbine structure. This may e.g. be provided by welding or by means of bolts fixating the part to the wind turbine tower wall, or a wall of the foundation arrangement such as a transition piece wall or an annular skirt thereof. In other embodiments, the part may be welded or bolted to a connection flange connecting the wind turbine tower to the foundation arrangement such as a transition piece of the foundation arrangement,

The interior surface of side wall 15x, such as a sleeve wall, of the receiving bracket 15 that surrounds and faces the male part 14a may act as a guide for the male part 14a during the relative movement between the male connection part 14a and the receiving bracket 15 so that the male part 14a extends into said opening 15a to a position where the platform arrangement is suspended.

It is generally understood that the opening 15a may be partly or fully enclosed by a bracket side wall structure such as a sleeve wall.

In some embodiments of the present disclosure, a lubricant such as a natural or synthetic oil or the like may be provided at the interior of the bracket 15 and/or at the male part 14a so that the male part slides more easily into the opening.

For example, in fig. 2 it can be seen that four platform connection arrangements 13 may be used, but it is understood that just one platform connection arrangement 13 may be used (e.g. centered beneath the floor structure) or two, three or more than four platform connection arrangements 13 may be used for suspending the platform arrangement 13 from the wind turbine structure.

It is generally understood that the platform arrangement may be suspended from the wind turbine structure by means of a plurality of the platform connection arrangements 13 each comprising at least one of the male connection part 14a and at least one of the receiving bracket 15,. The installation process may hence comprise that the lifted platform arrangement 5 is moved towards the wind turbine structure so that each of the male connection parts 14a of the plurality of connection arrangements 15 are aligned with an opening 15a of a receiving bracket 15, and then the lifted platform arrangement 5 is subsequently moved so that the male connection parts 14a extends into the opening 15a aligned with the respective male connection part 14a.

It is generally to be understood that in some embodiments of the present disclosure, the part of the platform connection arrangement 13 that is fixed at the wind turbine structure, such as the receiving bracket 15 or a bracket solution comprising the male part 14a may be welded, bolted or in other suitable ways securely attached to the wind turbine structure. This may e.g. be provided by welding or by means of bolts fixating the part to the wind turbine tower wall, or a wall of the foundation arrangement such as a transition piece wall or an annular skirt thereof. In other embodiments, the part may be welded or bolted to a connection flange connecting the wind turbine tower to the foundation arrangement such as a transition piece of the foundation arrangement,

Generally, the installation of the platform arrangement at the wind turbine structure 1 may comprise providing a lifting force by means of the lifting arrangement 80 so as to lift the platform arrangement. Then the lifted platform arrangement is moved towards the wind turbine structure (see dashed arrows) so that the male connection part(s) 14a is aligned with an opening 15a of the receiving bracket 15. The lifted platform arrangement is then moved, (lowered in figs. 12 and 13 - see dashed arrows) so that the male connection part(s) 14a extends into the respective opening 15a aligned with the male connection part 14a. Then, the lifting force at the lifted platform arrangement 5 is reduced so that the platform arrangement 5 is suspended from the wind turbine structure 1 by means of the platform connection arrangement 13, and finally, the platform arrangement can be detached from the platform lifting arrangement 80.

### Items.

The present disclosure is moreover described in relation to the following items.
1. An offshore wind turbine (1) comprising a nacelle (2) mounted on a tower (3), wherein said tower (3) supports on a foundation arrangement (4), wherein the offshore wind turbine (1) comprises a service crane arrangement (6) and a service platform (5) placed below the nacelle (2),
   wherein the service platform (5) comprises a floor arrangement (9) comprising an upwardly facing floor surface (9a) aligned with a door entrance (11) of the wind turbine,
   wherein the service crane arrangement (6) comprises a support frame arrangement (7) and a crane boom (100, 200), wherein the support frame arrangement (7) is supported by the service platform (5) and comprises one or more upper support parts (12) , wherein the crane boom (100, 200) is suspended substantially horizontally from the one or more upper support parts (12) at a distance above the upwardly facing floor surface (9a), and wherein the crane boom (100, 200) comprises a first, proximate boom part (100a, 200a) arranged proximate the tower, and a second, distal boom part (100b, 200b) extending out over an outer edge (10) of the service platform (5) floor (9),
   the service crane arrangement (6) further comprising a crane trolley (101, 201) configured to be displaced along a track (102, 202) in the longitudinal direction of the crane boom (100, 200) by means of a drive arrangement (103, 203), a flexible lifting medium (104, 204) such as a wire, rope or chain, a winch (110, 210) for winding and unwinding the flexible lifting medium (104, 204) and a drive unit (106, 206) for driving the winch, and wherein the flexible lifting medium (104, 204) is connected to the crane trolley (101, 201) and a connection part (105, 205) suspended, so that the connection part is suspended from the crane trolley (101, 201),
   wherein the winch is controllable so as to lift and lower the connection part between an upper position located above a floor plane (FP) defined by the upper floor surface (9a), and a lower position (POS3) placed below the floor plane (FP) in order to allow loading or unload service equipment (50) and/or personnel (40) connected to the connection part (105, 205) onto or from a marine vessel (30) when the crane trolley (101, 201) is placed at said second, distal boom part (100b, 200b), and
   wherein the winch (110, 210) is controllable so as to lift and lower the connection part to load and/or unload said equipment (50) and/or personnel (40) onto or from the service platform floor when the crane trolley (101, 201) is placed at said first proximate boom part (100a, 200a).
2. An offshore wind turbine (1) according to item 1, wherein the one or more upper support parts (12) comprises one or more transverse support beams (12) extending over the upwardly facing floor surface, and wherein the one or more transverse support beams (12) extends between opposing vertical support arrangements (8) such as comprising one or more support legs (8) such as vertically arranged support legs.
3. An offshore wind turbine (1) according to item 1 or 2, wherein the crane boom (100, 200) is supported by the one or more upper support parts (12) by means of a mechanical fixation connection such as one or more bolted and/or welded connections, at a predetermined fixation location so that the crane boom (100, 200) is configured to be maintained unmovable at the fixation location.
4. An offshore wind turbine (1) according to any of the preceding items, wherein the service crane arrangement (6) comprises a first crane boom (100) and a second crane boom (200), wherein the first and second crane booms (100, 200) are spaced apart to provide a distance there between,
   wherein a first crane trolley (101) is configured to be displaced along a track (102) in the longitudinal direction of the first crane boom (100), and wherein a first flexible lifting medium (104, 204) is connected to the first crane trolley (101) and a connection part (105), so that the connection part (105) is suspended from the first crane trolley, and
   wherein a second crane trolley (201) is configured to be displaced along a track (202) in the longitudinal direction of the second crane boom (100), and wherein a second, flexible lifting medium (204) is connected to the second crane trolley (201) and a connection part (205), so that the connection part (205) is suspended from the second crane trolley.
5. An offshore wind turbine (1) according to item 4, wherein a first winch (110) is configured to wind and unwind the first flexible lifting medium, and wherein a second winch (210) is configured to wind and unwind the second lifting medium, such as wherein the first and second winch are configured to be operated independently of each other by means of a control system (300, 320).
6. An offshore wind turbine (1) according to any of the preceding items, wherein the service platform (5) is structurally fixed, such as mainly structurally fixed, to the foundation arrangement (4) below the wind turbine tower (3), and/or or to the wind turbine tower (3) by means of one or a plurality of platform connection arrangements (13).
7. An offshore wind turbine (1) according to item 6, wherein the platform connection arrangement(s) (13) is configured to carry at least 70%, such as at least 80%, e.g. at least 95% of the overall weight of the service platform (5) and loads such as the equipment (50) and/or personnel (40) when handled by the service crane arrangement (6) and/or supporting on the platform floor (9).
8. An offshore wind turbine (1) according to any of items 6-7, wherein the platform connection arrangement (13) comprises one or more connector parts (15) comprising an upwardly or downwardly facing opening (15a) into which an end (14a1) of a connection part (14) of the platform connection arrangement (15) extend, such as as a result of an installation process where the platform is lowered onto a connection solution (15, 14a) fixed to the wind turbine structure (4, 3).s
9. An offshore wind turbine (1) according to any of the preceding items, wherein the service platform (5) is configured to carry a rated, certified total external weight, such as provided by personnel (4) and/or equipment (50), of no more than 8 ton, such as no more than 5 ton, such as no more than 3 ton, for example no more than 2 ton.
10. An offshore wind turbine (1) according to any of the preceding items, wherein the service platform (5) has a maximum width (W1) extending horizontally and in a direction transverse to the longitudinal direction of the tower (3) wherein the maximum width (W1) of the service platform is smaller than the width (W2), such as smaller than the diameter, of the tower (3) and/or foundation arrangement(4), at least at the location opposite to the service platform (5).
11. An offshore wind turbine (1) according to item 10, wherein the maximum width (W1) of the service platform (5) is at least 5%, such as at least 10%, for example at least 20% or 30% smaller than the width (W2) of the tower (3) and/or foundation arrangement (4), such a part of the tower (3) and/or foundation arrangement (4) arranged opposite to the platform (5).
12. An offshore wind turbine (1) according to item 10 or 11, wherein the service platform (5) has a maximum width (W1) of no more than 10 meters, such as no more than 8 meters, such as no more than 6 meters.
13. An offshore wind turbine (1) according to any of the preceding items, wherein the service platform (5) has a maximum length (LI), extending in a direction away from and perpendicular to the tower (3) and/or foundation arrangement (4), of no more than 10 meters, such as no more than 8 meters, such as no more than 6 meters or no more than 4 meters.
14. An offshore wind turbine (1) according to any of the preceding items, wherein said winch (110, 120) is attached to the crane trolley (101, 102) to be displaced together with the crane trolley.
15. An offshore wind turbine (1) according to any of the preceding items, wherein the crane boom (100, 200) comprises one or more of an H-beam, an I-beam, a T-beam or a box beam.
16. An offshore wind turbine (1) according to any of the preceding items, wherein the distal part of the one or more crane booms (100, 200) extends with a length (L2) of at least 1 meter, such as at least 2 meter, e.g. at least 3 meters out over the outer edge (10).
17. An offshore wind turbine (1) according to any of the preceding items, wherein the foundation arrangement such as is bottom fixed foundation arrangement, and comprises one of
   - a tripod foundation,
   - a monopile foundation,
   - a gravity foundation,
   - a jacket foundation or
   - a floating/buoyant foundation.
18. An offshore wind turbine (1) according to any of the preceding items, wherein the foundation arrangement (4) comprises a transition piece, wherein the transition piece is arranged between a wind turbine foundation of the foundation arrangement (4) and the tower (3), such as wherein the service platform (5) is structurally fixed, such as mainly structurally fixed, to the transition piece by means of a platform connection arrangements (13).
19. An offshore wind turbine (1) according to any of the preceding items, wherein the crane trolley (103, 203) is/are configured to be placed underneath and/or inside a weather shield (1, 3, 4, 60), such as underneath a minor roof structure and/or inside a minor housing, at least when not in use.
20. An offshore wind turbine (1) according to any of the preceding items, wherein said drive arrangement (103, 203) and said drive unit (106, 206) are configured to be controlled by means of a wireless control system (300), comprising one or more controllers (310), such as one or more controllers configured to receive control signals from one or more remote controls (320) such as wireless remote controls.
21. An offshore wind turbine (1) according to any of the preceding items, wherein said crane boom (100) is aligned with, or is configured to be displaced to be aligned with, the door entrance (11).
22. An offshore wind turbine (1) according to any of items 4-21, wherein a first winch (110) is configured to wind and unwind the first flexible lifting medium, and wherein the first winch (110) is configured to be controlled by means of a first drive unit (106), and wherein a second winch (210) is configured to wind and unwind the second lifting medium, and wherein the second winch is configured to be controlled by means of a second drive unit (206) wherein the first and second winches (106, 206) are configured to be operated simultaneously, such as synchronized, by means of a control system (300, 320) configured to control the first and second drive units (106, 206).
23. An offshore wind turbine (1) according to any of items 4-22, wherein the first crane trolley (101) is configured to be displaced along a track (102) by means of a first drive arrangement (103), wherein the second crane trolley (201) is configured to be displaced along a track (202) by means of a second drive arrangement (203), and wherein the first and second crane trolley (201, 202) are configured to be operated simultaneously, such as synchronized, by means of a control system (300, 320) configured to control the first and second drive arrangements (103, 203).
24. An offshore wind turbine (1) according to any of the preceding items, wherein said crane boom extends into the interior of the wind turbine through an opening (11, 93) in a wall (3a) of the wind turbine, such as wherein the trolley (101, 201) is configured to move into and out of the interior of the wind turbine through said opening (93, 11).
25. Method of transporting personnel (40) and/or equipment (50) between a marine vessel (30) and a service platform (5) of an offshore wind turbine (1) according to any of the preceding items, wherein the method comprises the steps of:
   approaching the offshore wind turbine by means of a marine vessel (30),
   operating the crane trolley (101, 201) by means of the drive arrangement (103, 203) to place the crane trolley at the second, distal boom part(100b, 200b),
   lowering the flexible lifting medium (104, 204) and connection part (205, 105) towards the marine vessel (30) by means of the winch (110, 210) to a position (POS3) below a floor plane (FP) defined by the platform floor (9) when the crane trolley (101, 102) is placed at the second, distal boom part (100b, 200b),
   lifting the personnel (40) and/or the equipment (50) at the marine vessel (30) by means of the lowered connection part (105, 205) and flexible lifting medium (104, 204) from the marine vessel (30) and to a position above the floor plane (FP),
   operating the crane trolley (101, 201) by means of the drive arrangement (103, 203) so as to move the crane trolley and thereby the lifted personnel (40) and/or equipment (50) along the crane boom (100, 200) to a position (100) above the floor (9),
   such as wherein the method further comprises operating the winch (110, 210) to lower the lifted personnel (40) and/or equipment (50) towards the platform floor (9).
26. A method according to item 25, wherein the service crane arrangement (6) comprises a first crane boom (100) and a second crane boom (200), wherein the first and second crane booms (100, 200) are spaced apart to provide a distance there between,
   wherein a first crane trolley (101) is displaced along a track (102) in the longitudinal direction of the first crane boom (100) by means of a drive arrangement (103), and wherein a first flexible lifting medium (104) is connected to the first crane trolley (101) and a connection part (105), so that the connection part is suspended from the first crane trolley,
   wherein a second crane trolley (201) is displaced along a track (202) in the longitudinal direction of the second crane boom (100) by means of a drive arrangement (203), and wherein a second, flexible lifting medium (204) is connected to the second crane trolley (201) and a connection part (205), so that the connection part is suspended from the second crane trolley,
   wherein the first flexible lifting is connected to a first winch (110), and wherein the first winch is operated to wind and unwind the a first flexible lifting medium (104), wherein the second flexible lifting medium (204) is connected to a second winch (210), and wherein the second winch is operated to wind and unwind the second flexible lifting medium (104).
27. A method according to item 26, comprising the steps of:
   utilizing the first crane boom, the first crane trolley (101), the first flexible lifting medium and the first winch (110) for transporting equipment (50) between the service platform (5) and the marine vessel (30), and
   utilizing the second crane boom, second, the second crane trolley (201), the second flexible lifting medium (204) and the second winch (210) for transporting personnel (40) between the service platform and the marine vessel.
28. A method according to item 26 or 27, wherein the first crane boom, the first crane trolley (101), the first flexible lifting medium and the first winch (110) constitutes an equipment crane assigned and dedicated for transporting equipment (50) between the service platform (5) and the marine vessel (30), and
   wherein the second crane boom (200), the second crane trolley (201), the second flexible lifting medium (204) and the second winch (210) constitutes a personnel crane assigned and dedicated for transporting personnel (40) between the service platform (5) and the marine vessel (30).
29. A method according to any of items 26-28, comprising the further step of Lowering both the first and second flexible lifting mediums (104, 204), and first and second connection parts (105, 205) to a level below the floor plane (FP), and
   connecting a personnel lifting equipment (20) to both the first and second flexible lifting mediums (104, 204) by means of the first and second connection parts,
   lifting the personnel by means of the personnel lifting equipment (20) while both the first and second flexible lifting mediums (104, 204) are connected thereto, wherein said lifting is provided by means of one or both of said first and second flexible lifting mediums (104, 204) by winding one or both of said winches (110, 210), and
   wherein said winches (110, 210) are controlled simultaneously by means of a common control system (300, 320).
30. A method according to item 29, wherein the control system (300, 320) operates one of the winches (110, 210) to provide a primary lifting of the personnel (40) by means of a first of the flexible lifting mediums (104, 204) and wherein the control system (300, 320) operates the other of the winches (110, 210) so that the weight lifted by the other flexible lifting mediums (104, 204) is reduced compared to the weight lifted by the first flexible lifting medium.
31. Use of a service crane arrangement (6) of an offshore wind turbine (1) according to any of items 1-24 for transporting personnel between a platform (5) and a marine vessel.
32. Use of a service crane arrangement (6) according to item 31, wherein a first crane boom (100) is used for transporting equipment (50), and wherein a second crane boom (200) is used for transporting said personnel (40).

While the present disclosure has been described in detail in connection with only a limited number of embodiments or aspects, it should be readily understood that the present disclosure is not limited to such disclosed embodiments or aspects. Rather, the present disclosure can be modified to incorporate any number of variations, alterations, substitutions or equivalent arrangements not heretofore described, but which are commensurate in scope with the present disclosure. Additionally, while various embodiments or aspects of the present disclosure have been described, it is to be understood that aspects of the present disclosure may include only some of the described embodiments or aspects or combinations of the various embodiments or aspects. Accordingly, the present disclosure is not to be seen as limited by the foregoing description.

### List

- 1: : Offshore wind turbine
- 2: : Nacelle
- 2a: : Hub
- 2b: : Wind turbine blade
- 3: : Tower
- 3a: : Tower wall or foundation arrangement wall, such as transition piece wall
- 4: : foundation arrangement
- 5: : Service platform
- 6: : Crane arrangement
- 7: : Support frame arrangement of service platform
- 8: : Vertical support arrangements such as comprising one or more support legs
- 9: : Service platform floor
- 9a: : Upwardly facing surface of service platform flooring
- 9b: : Floor girder
- 9c: : Transverse, horizontal floor beams beneath flooring
- 10: : Outer edge, such as outermost, edge of service platform
- 11: : Door entrance
- 12: : Transverse support beams
- 13: : Platform connection arrangement
- 14x, 14z: : Carrying structure, such as connection leg, of platform connection arrangement
- 14a: : Connection part of platform connection arrangement, such as a male part,
- 14a1: : Free end of connection part 14a
- 15: : Connector part, such as a bracket, such as comprising sleeve, of platform connection arrangement
- 15a: : Opening of connector part for receiving connection part.
- 16: : Side support bars of support frame
- 17: : Platform entrance opening
- 18: : interconnecting beam between support legs
- 19: : Railing
- 20: : Personnel lifting equipment
- 30: : Marine vessel
- 31: : Crane boom bracket
- 32: : Floor side parts
- 33: : recess space
- 40: : Personnel to be lifted by crane arrangement
- 50: : Equipment to be lifted by crane arrangement
- 60: : Weather shield such as minor roof or housing.
- 80: : Connection for crane or the like during platform installation
- 90: : Transition area between foundation arrangement and tower
- 91: : Cable, such as power supply for drive arrangement
- 93: : Wall opening
- 94: : Pulley
- 100: : First, fixed crane boom
- 101: : First Crane trolley
- 102: : Track of first crane boom
- 103: : First drive arrangement for displacing first crane trolley
- 104, 204: : Flexible lifting medium such as a wire, rope or chain,
- 105, 205: : Connection part connected to flexible lifting medium
- 106, 206: : Drive unit such as electric motor for driving winch
- 110: : First lifting arrangement
- 200: : Second, fixed crane boom
- 201: : Second crane trolley
- 202: : Track of second crane boom
- 203: : Second drive arrangement for displacing second crane trolley
- 210: : Second lifting arrangement
- 300: : Control system
- 310: : Controller
- 320: : Remote control
- POS1: : First position above service platform floor
- POS2: : Second position beyond edge of service platform
- CP: : Computer processor
- DS: : Data storage

## Claims

1. An offshore wind turbine (1) comprising a nacelle (2) mounted on a tower (3), wherein said tower (3) supports on a foundation arrangement (4), wherein the offshore wind turbine (1) comprises a service crane arrangement (6) and a service platform (5) placed below the nacelle (2),
wherein the service platform (5) comprises a floor arrangement (9) comprising an upwardly facing floor surface (9a) aligned with a door entrance (11) of the wind turbine,
wherein the service crane arrangement (6) comprises a support frame arrangement (7) and a crane boom (100, 200), wherein the support frame arrangement (7) is supported by the service platform (5) and comprises one or more upper support parts (12) , wherein the crane boom (100, 200) is suspended substantially horizontally from the one or more upper support parts (12) at a distance above the upwardly facing floor surface (9a), and wherein the crane boom (100, 200) comprises a first, proximate boom part (100a, 200a) arranged proximate the tower, and a second, distal boom part (100b, 200b) extending out over an outer edge (10) of the service platform (5) floor (9),
the service crane arrangement (6) further comprising a crane trolley (101, 201) configured to be displaced along a track (102, 202) in the longitudinal direction of the crane boom (100, 200) by means of a drive arrangement (103, 203), a flexible lifting medium (104, 204) such as a wire, rope or chain, a winch (110, 210) for winding and unwinding the flexible lifting medium (104, 204) and a drive unit (106, 206) for driving the winch, and wherein the flexible lifting medium (104, 204) is connected to the crane trolley (101, 201) and a connection part (105, 205) suspended, so that the connection part is suspended from the crane trolley (101, 201),
wherein the winch is controllable so as to lift and lower the connection part between an upper position located above a floor plane (FP) defined by the upper floor surface (9a), and a lower position (POS3) placed below the floor plane (FP) in order to allow loading or unload service equipment (50) and/or personnel (40) connected to the connection part (105, 205) onto or from a marine vessel (30) when the crane trolley (101, 201) is placed at said second, distal boom part (100b, 200b), and
wherein the winch (110, 210) is controllable so as to lift and lower the connection part to load and/or unload said equipment (50) and/or personnel (40) onto or from the service platform floor when the crane trolley (101, 201) is placed at said first proximate boom part (100b, 200b).

2. An offshore wind turbine (1) according to claim 1, wherein the one or more upper support parts (12) comprises one or more transverse support beams (12) extending over the upwardly facing floor surface, and wherein the one or more transverse support beams (12) extends between opposing vertical support arrangements (8) such as comprising one or more support legs (8) such as vertically arranged support legs.

3. An offshore wind turbine (1) according to any of the preceding claims, wherein the service crane arrangement (6) comprises a first crane boom (100) and a second crane boom (200), wherein the first and second crane booms (100, 200) are spaced apart to provide a distance there between,
wherein a first crane trolley (101) is configured to be displaced along a track (102) in the longitudinal direction of the first crane boom (100), and wherein a first flexible lifting medium (104, 204) is connected to the first crane trolley (101) and a connection part (105), so that the connection part (105) is suspended from the first crane trolley, and
wherein a second crane trolley (201) is configured to be displaced along a track (202) in the longitudinal direction of the second crane boom (100), and wherein a second, flexible lifting medium (204) is connected to the second crane trolley (201) and a connection part (205), so that the connection part (205) is suspended from the second crane trolley.

4. An offshore wind turbine (1) according to claim 3, wherein a first winch (110) is configured to wind and unwind the first flexible lifting medium, and wherein a second winch (210) is configured to wind and unwind the second lifting medium, such as wherein the first and second winch are configured to be operated independently of each other by means of a control system (300, 320).

5. An offshore wind turbine (1) according to any of the preceding claims, wherein the service platform (5) is structurally fixed, such as mainly structurally fixed, to the foundation arrangement (4) below the wind turbine tower (3), and/or or to the wind turbine tower (3) by means of one or a plurality of platform connection arrangements (13), such as wherein the platform connection arrangement(s) (13) is configured to carry at least 70%, such as at least 80%, e.g. at least 95% of the overall weight of the service platform (5) and loads such as the equipment (50) and/or personnel (40) when handled by the service crane arrangement (6) and/or supporting on the platform floor (9).

6. An offshore wind turbine (1) according to claim 5, wherein the platform connection arrangement (13) comprises one or more connector parts (15) comprising an upwardly or downwardly facing opening (15a) into which an end (14a1) of a connection part (14) of the platform connection arrangement (15) extend, preferably as a result of an installation process where the platform is lowered onto a connection solution (15, 14a) fixed to the wind turbine structure (4, 3).

7. An offshore wind turbine (1) according to any of the preceding claims, wherein the service platform (5) is configured to carry a rated, certified total external weight, such as provided by personnel (4) and/or equipment (50), of no more than 8 ton, such as no more than 5 ton, such as no more than 3 ton, for example no more than 2 ton.

8. An offshore wind turbine (1) according to any of the preceding claims, wherein the service platform comprises a first proximate side (17c) placed proximate the wind turbine structure and a second distal side (17d) arranged distal to the wind turbine structure, and opposing platform sides (17a, 17b) extending from said distal side to said proximate side, preferably wherein an access opening for accessing the service platform and/or the outer edge of the service platform, is placed at the distal side (17d).

9. An offshore wind turbine (1) according to any of the preceding claims, wherein the service platform (5) has a maximum width (W1) extending horizontally and in a direction transverse to the longitudinal direction of the tower (3) wherein the maximum width (W1) of the service platform is smaller than the width (W2), such as smaller than the diameter, of the tower (3) and/or foundation arrangement(4), at least at the location opposite to the service platform (5).

10. An offshore wind turbine (1) according to any of the preceding claims, wherein said winch (110, 120) is attached to the crane trolley (101, 102) to be displaced together with the crane trolley.

11. An offshore wind turbine (1) according to any of the preceding claims, wherein said drive arrangement (103, 203) and said drive unit (106, 206) are configured to be controlled by means of a wireless control system (300), comprising one or more controllers (310), such as one or more controllers configured to receive control signals from one or more remote controls (320) such as wireless remote controls.

12. Method of transporting personnel (40) and/or equipment (50) between a marine vessel (30) and a service platform (5) of an offshore wind turbine (1) according to any of the preceding claims, wherein the method comprises the steps of:
approaching the offshore wind turbine by means of a marine vessel (30),
operating the crane trolley (101, 201) by means of the drive arrangement (103, 203) to place the crane trolley at the second, distal boom part(100b, 200b),
lowering the flexible lifting medium (104, 204) and connection part (205, 105) towards the marine vessel (30) by means of the winch (110, 210) to a position (POS3) below a floor plane (FP) defined by the platform floor (9) when the crane trolley (101, 102) is placed at the second, distal boom part (100b, 200b),
lifting the personnel (40) and/or the equipment (50) at the marine vessel (30) by means of the lowered connection part (105, 205) and flexible lifting medium (104, 204) from the marine vessel (30) and to a position above the floor plane (FP),
operating the crane trolley (101, 201) by means of the drive arrangement (103, 203) so as to move the crane trolley and thereby the lifted personnel (40) and/or equipment (50) along the crane boom (100, 200) to a position (100) above the floor (9),
such as wherein the method further comprises operating the winch (110, 210) to lower the lifted personnel (40) and/or equipment (50) towards the platform floor (9).

13. A method according to claim 12, wherein the service crane arrangement (6) comprises a first crane boom (100) and a second crane boom (200), wherein the first and second crane booms (100, 200) are spaced apart to provide a distance there between,
wherein a first crane trolley (101) is displaced along a track (102) in the longitudinal direction of the first crane boom (100) by means of a drive arrangement (103), and wherein a first flexible lifting medium (104) is connected to the first crane trolley (101) and a connection part (105), so that the connection part is suspended from the first crane trolley,
wherein a second crane trolley (201) is displaced along a track (202) in the longitudinal direction of the second crane boom (100) by means of a drive arrangement (203), and wherein a second, flexible lifting medium (204) is connected to the second crane trolley (201) and a connection part (205), so that the connection part is suspended from the second crane trolley,
wherein the first flexible lifting is connected to a first winch (110), and wherein the first winch is operated to wind and unwind the a first flexible lifting medium (104),
wherein the second flexible lifting medium (204) is connected to a second winch (210), and wherein the second winch is operated to wind and unwind the second flexible lifting medium (104).

14. A method according to claim 13, comprising the steps of:
utilizing the first crane boom, the first crane trolley (101), the first flexible lifting medium and the first winch (110) for transporting equipment (50) between the service platform (5) and the marine vessel (30), and
utilizing the second crane boom, the second crane trolley (201), the second flexible lifting medium (204) and the second winch (210) for transporting personnel (40) between the service platform and the marine vessel.

15. A method according to claim 13 or 14, wherein the first crane boom, the first crane trolley (101), the first flexible lifting medium and the first winch (110) constitutes an equipment crane assigned and dedicated for transporting equipment (50) between the service platform (5) and the marine vessel (30), and
wherein the second crane boom (200), the second crane trolley (201), the second flexible lifting medium (204) and the second winch (210) constitutes a personnel crane assigned and dedicated for transporting personnel (40) between the service platform (5) and the marine vessel (30).
